# EUROPÄISCHE PATENTSCHRIFT

(11) **EP 3 133 101 B1**
(45) Veröffentlichungstag und Bekanntmachung des Hinweises auf die Patenterteilung: **21.03.2018**
(21) Anmeldenummer: 15182033.9
(22) Anmeldetag: 21.08.2015
(51) Int. Cl.: C08G 59/50, C09D 163/00

(54) **WÄSSRIGE HAFTVERMITTLERZUSAMMENSETZUNG AUF BASIS VON EPOXIDHARZ MIT VERBESSERTER HAFTVERMITTLUNG UND LAGERSTABILITÄT**
AQUEOUS ADHESIVE COMPOSITION ON THE BASUS OF AN EPOXY RESIN WITH IMPROVED ADHESION AND STORAGE STABILITY
COMPOSITION D'AGENT ADHESIF AQUEUSE A BASE DE RESINE EPOXY PRESENTANT UNE ADHERENCE ET UNE STABILITE DE STOCKAGE AMELIOREES

(43) Veröffentlichungstag der Anmeldung: 22.02.2017
(73) Patentinhaber: Sika Technology AG, 6340 Baar (CH)
(72) Erfinder: CORSARO, Antonio, 8105 Regensdorf (CH)
(74) Vertreter: Sika Patent Attorneys

(56) Entgegenhaltungen:
- DATABASE WPI Week 200429 Thomson Scientific, London, GB; AN 2004-307595 XP002752898, & JP 2003 239081 A (KAWASAKI STEEL CORP) 27. August 2003 (2003-08-27)

## Beschreibung

### Technisches Gebiet

Die Erfindung betrifft das Gebiet der Haftvermittlerzusammensetzungen und deren Verwendung als Voranstriche für Kleb- und Dichtstoffe.

### Stand der Technik

Haftvermittlerzusammensetzungen werden schon seit längerem eingesetzt, um die Haftung von Kleb- und Dichtstoffen auf unterschiedlichen Untergründen zu verbessern. Beispielsweise in der Automobilindustrie ist der Einsatz solcher Haftvermittler verbreitet, da dort besonders hohe Anforderungen an die Qualität der Haftung gestellt werden und zum Teil anspruchsvolle Substrate verklebt werden müssen.
Solche Haftvermittlerzusammensetzungen enthalten meist reaktive Bestandteile wie Organosilane, die untereinander und mit den Klebesubstraten reagieren und eine geeignete Zwischenschicht für den Klebstoff bilden. Die Zusammensetzungen sind typischerweise Lösungen oder Dispersionen, die flüssig aufgetragen werden bevor das Lösemittel verdunstet. Als Lösemittel kommen meistens flüchtige organische Verbindungen (VOC) zum Einsatz, die aber aus Gründen des Umwelt-, Gesundheits- und Arbeitsschutzes nachteilig sind. Es wurde deshalb versucht, lösemittelhaltige Haftvermittlerzusammensetzungen durch wässrige zu ersetzen. Ein oft beobachtetes Problem bei wässrigen Haftvermittlerzusammensetzungen auf Silanbasis, ganz besonders wenn sie als Einkomponentenzusammensetzungen formuliert werden, ist jedoch entweder deren relativ geringe Lagerstabilität bei genügender Reaktivität oder deren ungenügende Reaktivität bei genügender Lagerstabilität. Wässrige Haftvermittlerzusammensetzungen neigen zudem dazu, unter feuchtwarmen Bedingungen, beispielsweise bei Kataplasma-Lagerung, ihre Haftung im Klebeverbund wieder zu verlieren. Eine wässrige Haftvermittlerzusammensetzung mit vergleichsweise guter Beständigkeit unter feuchtwarmen Bedingungen ist beispielsweise in WO 2008/037780 beschrieben. Sie stellt ein Zweikomponentensystem bestehend aus einer Epoxidharzdispersion und einem Aminhärter dar. Bei längerer Kataplasma-Lagerung zeigt jedoch auch diese Haftvermittlerzusammensetzung Haftverlust.

Es besteht daher nach wie vor das Bedürfnis nach einer wässrigen Haftvermittlerzusammensetzung, die auch unter anspruchsvollen, feuchtwarmen Bedingungen eine über lange Zeiträume stabile Klebeverbindung ermöglicht und ausgezeichnete Lagerstabilität besitzt, sowohl in Zweikomponenten- wie in Einkomponentenformulierungen.

### Darstellung der Erfindung

Aufgabe der vorliegenden Erfindung ist es daher, eine Haftvermittlerzusammensetzung bereitzustellen, welche keine oder nur unwesentlich flüchtige organische Verbindungen freisetzt, als einkomponentige oder zweikomponentige Zusammensetzung formuliert werden kann und dabei in beiden Fällen eine sehr gute Lagerstabilität besitzt und gleichzeitig auch nach längerer Zeit nach Anwendung nicht zu einem Verlust der Haftung unter feuchtwarmen Bedingungen führt.
Diese Aufgabe wird durch eine erfindungsgemässe Haftvermittlerzusammensetzung nach Anspruch 1 gelöst.

Überraschenderweise wurde gefunden, dass der Einsatz von Säuren als Zusatzstoffe in der Haftvermittlerzusammensetzung deren Lagerstabilität wesentlich erhöht und insbesondere in Verbindung mit anorganischen Basen in Zweikomponentenformulierungen oder als wasserlöslichen Carbonsäuren in Einkomponentenformulierungen deren Beständigkeit unter feuchtwarmen Bedingungen signifikant verbessert.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine wässrige Haftvermittlerzusammensetzung, umfassend
a) mindestens ein dispergiertes Epoxidfestharz **EP**;
b) mindestens ein Aminosilan **AS**;
c) mindestens eine Säure **HS**;
d) mindestens einen Aminhärter **AH**; sowie
e) Wasser.

Mit "Poly" beginnende Substanznamen wie Polyamin oder Polyisocyanat bezeichnen im vorliegenden Dokument Substanzen, die formal zwei oder mehr der in ihrem Namen vorkommenden funktionellen Gruppen pro Molekül enthalten. Entsprechend werden im vorliegenden Dokument als "Polyamin" Verbindungen verstanden, welche zwei oder mehr Aminogruppen aufweisen.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Als "Kataplasma-Lagerung" wird hier die Lagerung eines Probekörpers bei einer Temperatur von 70°C und einer relativen Luftfeuchtigkeit von 100% bezeichnet.
Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC (Gelpermeationschromatographie) gegen Polystyrol als Standard bestimmt wird.
Als "Gewichtsprozent", abgekürzt "Gew.-%", bezeichnet das vorliegende Dokument einen Massenanteil in Massenprozent eines Bestandteils bezüglich einer Gesamtzusammensetzung. "Gewicht" wird als physikalische Masse, beispielsweise messbar in Gramm oder Kilogramm verstanden.

Bei einer besonders bevorzugten Ausführungsform der erfindungsgemässen Haftvermittlerzusammensetzung handelt es sich um eine mindestens zweikomponentige Haftvermittlerzusammensetzung, umfassend
- eine erste Komponente **KA**, enthaltend
   a) das mindestens eine dispergierte Epoxidfestharz **EP**;
   b) das mindestens eine Aminosilan **AS**;
   c) die mindestens eine Säure **HS**; sowie
   d) Wasser; und
- eine zweite Komponente **KB**, enthaltend
   a) den mindestens einen Aminhärter **AH**;
   b) zusätzlich mindestens eine anorganische Base **BA**; sowie
   c) Wasser.

Diese Ausführungsform hat die Vorteile einer besonders hohen Lagerstabilität durch das getrennte Aufbewahren und einer besonders guten Beständigkeit der Verklebung unter feuchtwarmen Bedingungen.

Eine zweite besonders bevorzugte Ausführungsform der erfindungsgemässen Haftvermittlerzusammensetzung ist eine einkomponentige Haftvermittlerzusammensetzung, die aus einer einzelnen Komponente **KAB** besteht, wobei die Säure **HS** mindestens eine wasserlösliche Carbonsäure **CHS** umfasst, bevorzugt aus mindestens einer wasserlöslichen Carbonsäure **CHS** besteht.

Diese Ausführungsform hat die Vorteile einer besonders einfachen Handhabung und Anwenderfreundlichkeit, und durch den Einsatz einer wasserlöslichen Carbonsäure **CHS** eine verbesserte Lagerstabilität, sowie erhöhte Beständigkeit der Verklebung unter feuchtwarmen Bedingungen.

Beim dispergierten Epoxidfestharz **EP** handelt es sich insbesondere um eine wässrige Dispersion eines Epoxidfestharzes **EP** der Formel (I). 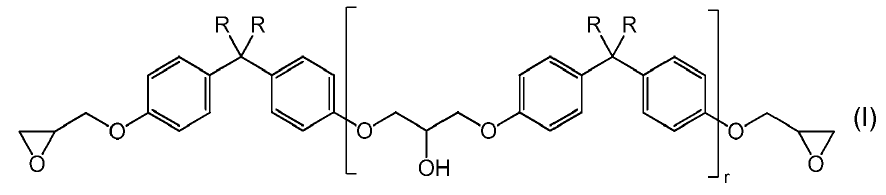 Hierbei stehen die Substituenten R unabhängig voneinander entweder für ein Wasserstoffatom oder eine Methylgruppe. Weiterhin steht der Index r für einen Wert von > 1, insbesondere von ≥ 1.5. Bevorzugt steht r für einen Wert von 2 bis 12.

Typischerweise weist ein Epoxidfestharz eine Glasübergangstemperatur auf, welche oberhalb der Raumtemperatur von etwa 23°C liegt. Epoxidfestharze lassen sich somit bei Raumtemperatur zu schüttfähigen Pulvern zerkleinern.

Derartige Epoxidfestharze sind als solche oder bereits in wässrig dispergierter Form beispielsweise kommerziell erhältlich von Dow Chemical Company, USA, von Huntsman International LLC, USA, oder von Hexion Specialty Chemicals Inc, USA.

Weiterhin geeignet sind beispielsweise Epoxidfestharze, welche zumindest teilweise N-Glycidylgruppen an Stelle von Glycidylethergruppen aufweisen, sowie Epoxidharze auf Basis von aliphatischen Glycidylethern.

Ebenfalls eignen sich Epoxidfestharze aus der Gruppe der Phenolharze, insbesondere Phenol- oder Kresolnovolake.

Für die vorliegende Erfindung ist es wesentlich, dass das Epoxidfestharz **EP** in Wasser dispergierbar ist. Es ist von Vorteil, ein durch geeignete Verfahren bereits in Wasser dispergiertes Epoxidfestharz **EP** als Rohstoff für die Haftvermittlerzusammensetzung einzusetzen. Solche wässrigen Dispersionen sind kommerziell erhältlich, können aber durch geeignete Verfahren selber hergestellt werden. Dabei ist zu beachten, dass das Verfahren so gewählt wird, dass die resultierende Dispersion bezüglich Eigenschaften wie beispielsweise Festkörpergehalt oder Partikelgrösse der dispergierten Partikel nach jedem Produktionsansatz im Wesentlichen gleich oder zumindest so ähnlich ist, dass die Eigenschaften der daraus hergestellten Haftvermittlerzusammensetzung nicht beeinträchtigt werden.

Gegebenenfalls enthält solch eine wässrige Dispersion mindestens eines Epoxidfestharzes **EP** weitere Bestandteile, wie beispielsweise Epoxid-Flüssigharze, Stabilisatoren, Emulgatoren, Co-Emulgatoren, Entschäumer, Biozide, Pigmente, Füllstoffe, Reaktivverdünner oder Katalysatoren. Die wässrige Dispersion ist bevorzugt über einen Zeitraum von mehreren Monaten bis zu einem Jahr oder länger stabil, ohne mehrere Phasen oder Abscheidungen zu bilden, die sich durch Schütteln oder Rühren nicht wieder in eine makroskopisch homogene Dispersion überführen lassen.

Eine für die vorliegende Erfindung geeignete wässrige Dispersion mindestens eines Epoxidfestharzes **EP** weist vorzugsweise einen Festkörpergehalt an Epoxidfestharz **EP** von 30 bis 80 %, insbesondere 45 bis 65%, besonders bevorzugt 50 bis 60% auf. Entsprechend weist die wässrige Dispersion mindestens eines Epoxidfestharzes insbesondere etwa 20 bis 70% Wasser auf.

Die mittlere Teilchengrösse der dispergierten Partikel aus Epoxidfestharz **EP** in der Dispersion liegt insbesondere im Bereich von 0.05 bis 20 µm, insbesondere 0.1 bis 10 µm, besonders bevorzugt 0.2 bis 5 µm.

Beispielweise sind geeignete wässrige Dispersionen eines Epoxidfestharzes **EP** unter dem Handelsnamen Waterpoxy® 1422 kommerziell erhältlich von Cognis oder unter dem Handelsnamen Ancarez™ AR555 Waterborne Epoxy Resin von Air Products. Diese können für die vorliegende Erfindung ohne Modifikation eingesetzt werden.

Der Anteil der besonders bevorzugt eingesetzten wässrigen Dispersion mit einem Festkörpergehalt von 50 bis 60% mindestens eines Epoxidfestharzes **EP** in der erfindungsgemässen Haftvermittlerzusammensetzung beträgt vorzugsweise 35 bis 50 Gew.-%, insbesondere 40 bis 45 Gew.-% der wässrigen Dispersion, bezogen auf die gesamte Haftvermittlerzusammensetzung, beziehungsweise bevorzugt 75 bis 95 Gew.-%, insbesondere 80 bis 90 Gew.-%, bezogen auf die Komponente **KA** einer mindestens zweikomponentigen Haftvermittlerzusammensetzung.

Weiterhin umfasst die erfindungsgemässe Haftvermittlerzusammensetzung mindestens ein Aminosilan **AS.**

Dieses mindestens eine Aminosilan **AS** ist bevorzugt entweder in der Komponente **KA** zusammen mit der Säure **HS** enthalten, oder in der Komponente **KAB** zusammen mit der wasserlöslichen Carbonsäure **CHS.**
In bevorzugten Ausführungsformen enthält die erfindungsgemässe Zusammensetzung weitere Organosilane, beispielsweise Mercaptosilane, die die Haftung auf bestimmten Substraten weiter verbessern können. Diese weiteren Organosilane werden, falls vorhanden, bevorzugt zusammen mit dem mindestens einen Aminosilan **AS** in der Zusammensetzung eingesetzt.

Im vorliegenden Dokument bezeichnen die Terme "Silan" bzw. "Organosilan" Verbindungen, welche einerseits mindestens eine, üblicherweise zwei oder drei, hydrolysierbare Gruppen aufweisen, vorzugsweise über Si-O-Bindungen, direkt an das Siliciumatom gebundene Alkoxygruppen oder Acyloxygruppen, und andererseits mindestens einen, über eine Si-C-Bindung, direkt an das Siliciumatom gebundenen organischen Rest aufweisen. Derartige Silane mit Alkoxy- oder Acyloxygruppen sind dem Fachmann auch als Organoalkoxysilane bzw. Organoacyloxysilane bekannt.

Solche Silane haben die Eigenschaft, bei Kontakt mit Feuchtigkeit mindestens teilweise zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Der Ausdruck "unabhängig voneinander" bedeutet hier immer auch unabhängig voneinander in demselben Molekül, wenn verschiedene Möglichkeiten bestehen.

Als Aminosilane **AS** sind insbesondere Aminosilane geeignet, welche ausgewählt sind aus der Gruppe bestehend aus 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-aminopropyl-trimethoxysilan, N-Ethyl-3-aminopropyl-trimethoxysilan, N-Butyl-3-aminopropyl-trimethoxysilan, N-Cyclohexyl-3-aminopropyl-trimethoxysilan, N-Phenyl-3-aminopropyl-trimethoxysilan, N-Methyl-3-amino-2-methylpropyl-trimethoxysilan, N-Ethyl-3-amino-2-methylpropyl-trimethoxysilan, N-Ethyl-3-aminopropyl-dimethoxy-methylsilan, N-Phenyl-4-aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethylaminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, Bis(trimethoxysilylpropyl)amin, sowie deren Analoga mit drei Ethoxy- oder drei Isopropoxygruppen anstelle der drei Methoxygruppen am Silicium.
Es ist möglich und vorteilhaft, Mischungen solcher Aminosilane als Aminosilan **AS** einzusetzen. Als besonders vorteilhaft hat sich beispielsweise die Mischung aus 3-Aminopropyl-trimethoxysilan, N-(2-Aminoethyl)-3-aminopropyl-trimethoxysilan und Bis(trimethoxysilylpropyl)amin erwiesen.

Aminosilan **AS**, bevorzugt eingesetzt als Mischung verschiedener Aminosilane, ist bevorzugt in der erfindungsgemässen Haftvermittlerzusammensetzung enthalten mit einem Gehalt von 0.1 bis 10 Gew.-%, bevorzugt 0.25 bis 5 Gew.-%, besonders bevorzugt 0.5 bis 2 Gew.-%, bezogen auf die gesamte Haftvermittlerzusammensetzung.

Besonders bevorzugte, allfällig vorhandene Mercaptosilane sind 3-Mercaptopropyl-trimethoxysilan und 3-Mercaptopropyltriethoxysilan, am meisten bevorzugt 3-Mercaptopropyl-trimethoxysilan. Diese sind bevorzugt enthalten mit einem Gehalt von 0.1 bis 0.2 Gew.-%, bezogen auf die gesamte Haftvermittlerzusammensetzung.

Die erfindungsgemässe Zusammensetzung enthält weiterhin mindestens eine Säure **HS.**

Die Säure **HS** wird, falls sie in einer mindestens zweikomponentigen Zusammensetzung umfassend eine Komponente **KA** und eine Komponente **KB** verwendet wird, zusammen mit dem Aminosilan **AS** in der Komponente **KA** eingesetzt. Der Vorteil dieser Kombination ist eine wesentlich erhöhte Lagerstabilität der Komponente **KA** der wässrigen zwei- oder mehrkomponentigen Zusammensetzung enthaltend Aminosilan **AS.** Geeignet als Säure **HS** sind prinzipiell alle Säuren, die in einer wässrigen Lösung, Emulsion oder Dispersion die primären und/oder sekundären Aminogruppen von Aminosilanen **AS** protonieren können. Geeignete Säuren **HS** sind beispielsweise anorganische Säuren wie Salpetersäure, Phosphorsäure, Phosporige Säure, Phosponsäure, Phosphonige Säure, Schwefelsäure, Schweflige Säure, Perschwefelsäure, Dischwefelsäure (=Pyroschwefelsäure), Dischwefelige Säure, Dithionsäure, Dithionige Säure, Thioschwefelsäure oder Thioschweflige Säure oder organische Säuren wie wasserlösliche Carbonsäuren **CHS**, die weiter unten beschreiben werden. Bevorzugte Säuren **HS** sind Schwefelsäure, Phosphorsäure und wasserlösliche Carbonsäuren **CHS.** Besonders bevorzugt werden die Säuren in genügend hoher Verdünnung eingesetzt, dass sie für die Arbeitssicherheit des Anwenders kein Risiko bedeuten und keine Umweltgefährdung darstellen. Dies gilt besonders auch für korrosive Säuren.

Die Säure **HS** und/oder die wasserlösliche Carbonsäure **CHS** ist bevorzugt enthalten in der erfindungsgemässen Haftvermittlerzusammensetzung mit einem Gehalt von 0.1 bis 5 Gew.-%, bevorzugt 0.25 bis 2.5 Gew.-%, bezogen auf die gesamte Haftvermittlerzusammensetzung, beziehungsweise mit einem Gehalt von 0.2 bis 10 Gew.-%, bevorzugt 0.5 bis 5 Gew.-%, bezogen auf die Komponente **KA** einer zweikomponentigen Haftvermittlerzusammensetzung.

Weiterhin umfasst die erfindungsgemässe Haftvermittlerzusammensetzung mindestens einen Aminhärter **AH.**

Als Aminhärter im Sinne der vorliegenden Erfindung gelten flüssige oder feste Polyamine, die über primäre und/oder sekundäre Aminogruppen verfügen, und die mit den Epoxygruppen des dispergierten Epoxidfestharzes **EP** reagieren können.

Aminhärter **AH** sind bevorzugt chemisch und physikalisch so beschaffen, dass sie von selber oder durch Einsatz geeigneter Zusatzmittel wie Netz- oder Dispergiermittel in Wasser gelöst, emulgiert oder dispergiert werden können und in dieser Form genügend lange stabil sind.

Geeignete Aminhärter **AH** sind beispielsweise beschrieben in der europäischen Patentanmeldung EP09178262.3.

Vorzugsweise ist der Aminhärter **AH** ein Reaktionsprodukt, insbesondere ein Polyamidoamin oder ein Epoxidharz/Polyamin-Additionsprodukt, wobei das Additionsprodukt einen Überschuss an Aminogruppen im Vergleich zu Epoxygruppen aufweist.
Bevorzugt handelt es sich beim Aminhärter **AH** um ein Polyamidoamin. Beispielsweise sind dies Kondensationsprodukte von Carbonsäuren mit Polyaminen, beispielsweise einer Fettsäure oder einer Polycarbonsäure mit einem Polyalkylenamin.
Besonders geeignete Aminhärter **AH** sind Additionsprodukte von Epoxidharzen und Polyaminen. Derartige Additionsprodukte lassen sich beispielsweise aus einer Vielzahl möglicher dem Fachmann bekannter Polyamine und Epoxidharzen, insbesondere Bisphenol A-Diglycidylether, erhalten. Hierfür bevorzugte Polyamine sind Ethylendiamin, Isophorondiamin, 2,2,4- und 2,4,4-Trimethylhexamethylendiamin, 1,3-Xylylendiamin, Polyalkylenamine wie Polyethylenamine oder Polyoxyalkylendiamine oder -triamine, insbesondere wie sie unter dem Handelsnamen Jeffamine® von Huntsman erhältlich sind. Bevorzugt handelt es sich beim Reaktionsprodukt um dasjenige eines Diglycidylethers von Bisphenol A und/oder Bisphenol F mit einem Polyoxyalkylendiamin oder Polyoxyalkylentriamin. Ein besonders geeignetes Additionsprodukt ist dasjenige, welches in EP 0567831 als Bis(diamin)-di-epoxidaddukt beschrieben ist.

Es ist durchaus möglich und kann sogar von Vorteil sein, eine Mischung verschiedener Aminhärter **AH** in der erfindungsgemässen Haftvermittlerzusammensetzung einzusetzen. Gegebenenfalls können auch Mischungen von Polyaminen mit Mercaptogruppen aufweisenden Verbindungen eingesetzt werden.

Es ist vorteilhaft, die Mengen **EP** und **AH** in der erfindungsgemässen Zusammensetzung so einzustellen, dass das Verhältnis der Epoxidäquivalente in der Dispersion des Epoxidfestharzes **EP** zu den Äquivalenten aktiven Aminwasserstoffs im Aminhärter **AH** zwischen 1:1 und 20:1 liegt. Dies bedeutet, dass ein Überschuss an Epoxidäquivalenten vorteilhaft ist. Bevorzugt ist ein Verhältnis von Epoxidäquivalenten zu Aminäquivalenten von zwischen 1:1 und 4:1.

Der Anteil des Aminhärters **AH** ist insbesondere so gewählt, dass in der Haftvermittlerzusammensetzung ein Verhältnis von Aminogruppen von Aminhärter **AH** zu Epoxidgruppen von der wässrigen Dispersion des Epoxidfestharzes **EP** im Bereich von 0.1:1 bis 1:1 zustande kommt.

Vorzugsweise beträgt der Anteil des Aminhärter **AH** 0.5 bis 30 Gew.-%, insbesondere 1 bis 20 Gew.-%, besonders bevorzugt 2.5 bis 15 Gew.-%, bezogen auf die gesamte Haftvermittlerzusammensetzung, beziehungsweise 1 bis 60 Gew.-%, insbesondere 2 bis 40 Gew.-%, besonders bevorzugt 3 bis 20 Gew.-%, bezogen auf die Komponente **KB** einer mindestens zweikomponentigen Haftvermittlerzusammensetzung.

In bevorzugten Ausführungsformen enthält die Haftvermittlerzusammensetzung den Aminhärter **AH** als eine vorgängig hergestellte wässrige Lösung, wässrige Emulsion oder wässrige Dispersion, wobei die wässrige Lösung, Emulsion oder Dispersion einen Festkörpergehalt an Aminhärter **AH** von 30 bis 90 %, bevorzugt 50 bis 90 %, besonders bevorzugt 75 bis 85 %, bezogen auf die gesamte wässrige Lösung, wässrige Emulsion oder wässrige Dispersion von Aminhärter **AH** aufweist.
Als Festkörpergehalt gilt hier der effektive Gehalt an Aminhärter in der wässrigen Emulsion, Lösung oder Dispersion, wobei der Aminhärter im Reinzustand auch flüssig sein kann.

Geeignete Aminhärter **AH**, die in wässrigen Zusammensetzungen der vorliegenden Erfindung eingesetzt werden können und zum Teil bereits als wässrige Zubereitung in den Handel kommen, sind beispielsweise Anquamine® 731, Anquamine® 735 und Anquawhite® 100, alle von Air Products, oder Beckopox® EH 623W von Allnex.

Die erfindungsgemässe Zusammensetzung enthält im Falle einer zwei- oder mehrkomponentigen Zusammensetzung bevorzugt mindestens eine anorganische Base **BA**, welche in der Komponenten **KB** zusammen mit dem Aminhärter **AH** eingesetzt wird. Der Einsatz mindestens einer anorganischen Base **BA** bietet den Vorteil, dass die Säure **HS** in der Komponenten **KA** beim Vereinigen der beiden Komponenten **KA** und **KB** zumindest teilweise neutralisiert wird und damit sowohl die Haftungswirkung der gemischten Zusammensetzung verbessert wird als auch die Reaktion der Organosilane untereinander und/oder mit den Substraten beschleunigt wird. Somit wird eine deutlich verbesserte Beständigkeit der Haftung unter feuchtwarmen Bedingungen erreicht.

Anorganische Basen **BA** im Sinne der vorliegenden Erfindung sind weitegehend wasserlösliche Verbindungen aus Metallen und Oxiden und/oder Hydroxiden, die beim Lösen in reinem Wasser den pH-Wert auf über 7 erhöhen. Bevorzugte anorganische Basen **BA** sind Oxide oder Hydroxide von Alkali- oder Erdalkalimetallen, wobei die Oxide mit Wasser zu Hydroxiden reagieren. Besonders bevorzugt sind Hydroxide von Alkali- oder Erdalkalimetallen, insbesondere Magnesiumhydroxid, Calciumhydroxid und/oder Bariumhydroxid. Am meisten bevorzugt ist Calciumhydroxid.

In besonders bevorzugten Ausführungsformen der erfindungsgemässen zwei- oder mehrkomponentigen Zusammensetzung wird die Säure **HS** und die anorganische Base **BA** so gewählt, dass bei der Neutralisation ein schwerlösliches Salz gebildet wird. Ein schwerlösliches Salz im Sinne der vorliegenden Erfindung stellt ein Ionenpaar dar, das bei 23 °C zu mindestens 25 Gew.-%, bevorzugt mindestens 50 Gew.-%, bezogen auf die gesamthaft vorhandenen Ionen, spontan als Salz aus der Lösung ausfällt. Bevorzugte Säure-Basenpaare sind Alkali- oder Erdalkalihydroxide oder-oxide gepaart mit Schwefelsäure, die dann als Alkali- oder Erdalkalisulfate ausfallen oder dieselben Basen gepaart mit Phosphorsäure, die dann als Alkali- oder Erdalkaliphosphate ausfallen. Ebenfalls geeignet ist die Kombination Weinsäure mit Calcium- oder Kaliumhydroxid, das als Calcium-oder Kaliumtartrat ausfällt. Besonders bevorzugt ist die Kombination Calciumhydroxid mit Phosphorsäure, die als Calciumphosphat ausfällt. Der Vorteil dieser Fällungsreaktionen ist eine verbesserte Haftungswirkung der Haftvermittlerzusammensetzung und ein verbesserter Aufbau der Haftvermittlerschicht auf dem Substrat.

Bevorzugte Ausführungsformen der erfindungsgemässen Zusammensetzung enthalten weiterhin mindestens eine wasserlösliche Carbonsäure **CHS.** Diese kann auch als Säure **HS** in zwei- oder mehrkomponentigen Ausführungsformen Anwendung finden.
Als wasserlöslich im Sinne der vorliegenden Erfindung gelten Carbonsäuren, wenn sie bei 23 °C in deionisiertem Wasser zu mindestens 50 g Carbonsäure pro Liter Wasser löslich sind und weitgehend stabile Lösungen bilden. Dabei sind Carbonsäuren bevorzugt, die eine höhere Löslichkeit besitzen.
Als wasserlösliche Carbonsäuren **CHS** sind insbesondere die folgenden geeignet: gesättigte aliphatische Monocarbonsäuren, wie insbesondere Ameisensäure, Essigsäure, Propionsäure, Buttersäure, Isobuttersäure; einfach ungesättigte aliphatische Carbonsäuren wie Acrylsäure; gesättigte oder ungesättigte Dicarbonsäuren wie Bernsteinsäure, Glutarsäure, Adipinsäure, Pimelinsäure, Maleinsäure, Fumarsäure oder Oxalsäure; Hydroxycarbonsäuren wie Äpfelsäure, Citronensäure, Glycolsäure, Isocitronensäure, Mandelsäure, Milchsäure, Tartronsäure, Weinsäure; Ketosäuren wie Brenztraubensäure, Acetessigsäure, Lävulinsäure oder Oxalessigsäure. Bevorzugt sind insbesondere Monocarbonsäuren mit 4 oder weniger Kohlenstoffatomen, oder Polycarbonsäuren mit 8 oder weniger Kohlenstoffatomen, sowie Hydroxycarbonsäuren und Ketosäuren, sowie Mischformen davon. Am meisten bevorzugt ist Essigsäure. Essigsäure besitzt insbesondere die Vorteile dass sie in der erfindungsgemässen Zusammensetzung eine ausgezeichnete Stabilisierungswirkung entfaltet, in wässriger Verdünnung bezüglich Arbeitssicherheit unproblematisch ist, überall leicht und günstig erhältlich ist, sowie für die Umwelt keine Gefährdung darstellt.

Die ein- oder zweikomponentige Zusammensetzung kann neben Wasser weitere optionale Bestandteile umfassen. Derartige zusätzliche Bestandteile sind z.B. Tenside, Säuren, Haftvermittleradditive, Katalysatoren, Cosolventien, Biozide, Antiabsetzmittel, Stabilisatoren, Inhibitoren, Pigmente, Farbstoffe, Korrosionsschutzmittel, Geruchsstoffe, UV-Indikatoren, Thixotropiermittel, Füllstoffe, Entschäumer, weitere Organosilane und Titanate.

Bevorzugte Ausführungsformen der erfindungsgemässen Haftvermittlerzusammensetzung enthalten, falls sie mindestens zweikomponentig sind, in der Komponente **KA** und/oder der Komponente **KB** oder, falls sie einkomponentig sind, in der Komponente **KAB** zusätzlich mindestens einen Entschäumer und/oder mindestens einen Silankatalysator und/oder mindestens ein weiteres Organosilan, insbesondere mindestens ein Mercaptosilan, und/oder mindestens ein Pigment, insbesondere Russ.

Ein Silankatalysator ist eine Verbindung, die in der Lage ist, die Hydrolyse und/oder Kondensation von Organosilanen zu katalysieren. Solche Verbindungen sind dem Fachmann bestens bekannt und umfassen beispielsweise Metallkomplexe wie Zinnkomplexe, Titanate, Zirkonate und dergleichen, sowie organische Verbindungen mit tertiären Aminen wie N-alkylierte Morpholine, Guanidine oder Amidine. Für die vorliegende Erfindung bevorzugt sind Zinnkomplexe wie Dibutylzinndilaurat.

Ferner sind Tenside bevorzugte zusätzliche Bestandteile der ein-, zwei- oder mehrkomponentigen wässrigen Haftvermittlerzusammensetzung. Als Tenside können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, nichtionische oder ampholytische Tenside oder deren Mischungen verwendet werden.

Beispiele für anionische Tenside sind Carboxylat-, Sulfat-, Phosphat- oder Sulfonat-Gruppen aufweisende Tenside, wie zum Beispiel Aminosäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Zu den nichtionischen Tensiden, den sogenannten Niotensiden, gehören z.B. Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenyl-polyglykolether, wie z.B. Fettalkoholpolyglykolether, oder Fettsäureamide, Alkylglykoside, Zuckerester, Sorbitanester, Polysorbate oder Trialkylaminoxide, aber auch Ester und Amide aus Poly(meth)-acrylsäuren mit Polyalkylenglykolen oder Aminopolyalkylenglykole, die allenfalls einseitig mit Alkylgruppen abgeschlossen sein können.

Beispiele für kationische Tenside sind quaternäre Ammonium- oder Phosphoniumverbindungen, wie zum Beispiel Tetraalkylammoniumsalze, N-,N-Dialkyl-imidazolinverbindungen, Dimethyldistearyl-ammoniumverbindungen, oder N-Alkylpyridinverbindungen, insbesondere Ammoniumchloride. Zu den amphoytischen oder amphoterischen Tensiden gehören amphotere Elektrolyte, sogeannte Ampholyte, wie zum Beispiel Aminocarbonsäuren, und Betaine.

Derartige Tenside sind kommerziell breit erhältlich. Besonders geeignet sind alkoxylierte Alkohole, alkoxylierte nichtionische Fluorotenside, insbesondere Zonyl® FSO-100, welches von ABCR, Deutschland kommerziell erhältlich ist, alkoxylierte Alkohole oder alkoxylierte Alkylphenole, insbesondere Antarox FM 33, welches kommerziell bei Rhodia kommerziell erhältlich ist. Weiterhin sind alkoxylierte Fettalkohole, wie Hydropalat® 120 von Cognis, bevorzugt. Besonders bevorzugt wird Hydropalat® 3031 von Cognis als Tensid eingesetzt.

Die erfindungsgemässe Haftvermittlerzusammensetzung enthält bevorzugt weitere Inhaltsstoffe, wie sie in Haftvermittlerzusammensetzungen üblich und beispielsweise in WO 2008/037780 beschrieben sind, insbesondere Verbindungen, wie sie darin beschrieben sind als Epoxysilan ES oder ESx. Besonders bevorzugt enthält die Haftvermittlerzusammensetzung Silane, gegebenenfalls zumindest teilweise in Form ihrer Siloxane, sowie Pigmente. Bevorzugte Silane sind Epoxysilane, insbesondere 3-Glycidoxypropylsilane, Addukte aus Epoxysilanen und Aminosilanen, sowie oligomere und/oder teilweise oder ganz hydrolysierte Rekationspordukte von Organosilanen.

Bevorzugte Pigmente sind Eisenpigmente und insbesondere Russ. Der Einsatz von Pigmenten und/oder Russ hat beispielsweise den Vorteil, dass in Zusammensetzungen mit mindestens zwei Komponenten eine Komponente davon mit Pigmenten und/oder Russ eingefärbt ist und so für den Anwender die Unterscheidung der Komponenten leichter fällt und Fehler vermieden werden können. Auch zeigt eine mittels Russ und/oder Pigmenten eingefärbte Haftvermittlerzusammensetzung das korrekte Vorhandensein der Haftvermittlerschicht auf dem Substrat nach Applikation an.

Die vorliegende Erfindung kann entweder als besonders lagerstabile, mindestens zweikomponentige Haftvermitterzusammensetzung formuliert werden oder als besonders anwenderfreundliche, mindestens einkomponentige Haftvermittlerszuammensetzung.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Insbesondere gelten Haftvermittlerzusammensetzungen im Sinne der vorliegenden Erfindung als lagerstabil, wenn sie nach den vorgängig beispielsweise genannten oder an den betreffenden Stellen definierten Lagerzeiträumen keine wesentlichen Einbussen in der Haftvermittlungswirkung zeigen.

Bevorzugte mindestens zweikomponentige erfinderische Zusammensetzungen umfassen eine Komponente **KA** und eine Komponente **KB.** Diese beiden Komponenten sind unabhängig voneinander jeweils mindestens 9 Monate, in bevorzugten Ausführungsformen mindestens ein Jahr lagerstabil und werden kurz vor Applikation gemischt. Die Mischung der beiden Komponenten hat eine lange Offenzeit von mindestens einer Woche, in bevorzugten Ausführungsformen mindestens 2 bis 3 Wochen, oder länger. Es ist ohne Einschränkung möglich, eine alte, beispielsweise vor einem halben Jahr hergestellte Komponente **KA** mit einer frischen Komponente **KB** zu kombinieren oder umgekehrt, ohne dass die Leistung der Haftvermittlerzusammensetzung signifikant beeinträchtigt wird.

Das optimale Mischverhältnis der Komponenten **KA** zur Komponenten **KB** kann durch den Gehalt der Bestandteile der Komponenten gesteuert werden. Dabei ist zu beachten, dass in Komponente **KA** genügend Säure **HS** vorhanden sein soll, um die Aminosilane **AS** durch Protonierung zu stabilisieren. Gleichzeitig soll Komponente **KB** so bemessen sein, dass bei Vereinigen der beiden Komponenten **KA** und **KB** die Säure **HS** durch die anorganische Base **BA** neutralisiert wird und die Aminosilane **AS** eine verbesserte Haftung auf dem Haftsubstrat aufbauen können.
Der Fachmann ist in der Lage, aus den Kennwerten der Rohstoffe wie beispielsweise Aminzahl und den eingesetzten Mengen eine sinnvolle Zusammensetzung zu errechnen und durch Experimente, wie pH-Messungen und Haftversuche, zu optimieren.

Bezüglich Mischverhältnis der Komponenten **KA** und **KB** zueinander kann ein 1:1 Mischverhältnis von **KA:KB** eingesetzt werden. Es hat sich jedoch in vielen Ausführungsformen als vorteilhaft erwiesen, ein Mischverhältnis von **KA:KB** von 2:1, 3:1, 4:1 oder höher einzusetzen. Durch Zugabe eines kleinen Volumens **KB** zu einem grossen Volumen **KA** ergeben sich für den Anwender Vorteile. So kann beispielsweise ein grosses Gefäss, beispielsweise ein Eimer, mit Komponente **KA** zur Verfügung gestellt werden, in dem noch genügend freies Volumen vorhanden ist für die Zugabe eines kleinen Volumens, beispielsweise eine Flasche oder ein Beutel, Komponente **KB.** Als weiterer Vorteil ist das Mischsystem so weniger fehleranfällig als wenn ein striktes 1:1 Verhältnis eingehalten werden müsste. Als zusätzlicher Vorteil ist, falls Komponente **KB** Russ oder Pigmente enthält, für den Anwender direkt ersichtlich ob die Komponenten bereits gemischt worden sind oder nicht. Die Zugabe eines kleinen Volumens dunkler Komponente **KB** zu einem grossen Volumen heller Komponente **KA** führt zu einer unterscheidbaren Mischfarbe in der fertigen Mischung aus **KA** und **KB.**

In anderen bevorzugten Ausführungsformen umfasst die erfindungsgemässe Haftvermittlerzusammensetzung eine einzelne Komponente **KAB**, die alle erfindungswesentlichen Bestandteile enthält. Diese Ausführungsformen besitzen eine Lagerstabilität von mindestens 3 Monaten, in bevorzugten Ausführungsformen Lagerstabilitäten von mindestens 6 Monaten. Als Vorteil dieser Ausführungsformen entfällt natürlich die Mischung der Komponenten vor Gebrauch, und die Haftvermittlerzusammensetzungen können direkt appliziert werden. Dies vermindert mögliche Anwenderfehler und verringert den Bedarf an Lagerplatz, nötigen Arbeitsschritten und verkürzt damit Taktzeiten. Bei der Formulierung der einzelnen Komponente **KAB** ist darauf zu achten, dass ein genügend hoher Überschuss an wasserlöslicher Carbonsäure **CHS** im Vergleich zu Aminhärter **AH** vorhanden ist, damit die überschüssige Säure noch einen stabilisierenden Effekt auf das Aminosilan **AS** hat. Die benötigte Menge kann der Fachmann aus der Aminzahl des Aminhärters **AH** und der eingesetzten Menge errechnen. Es hat sich als vorteilhaft erwiesen, einen Überschuss von beispielsweise 1 Molprozent oder mehr an Carboxylgruppen der wasserlöslichen Carbonsäure **CHS**, bezogen auf die Mol Aminogruppen des Aminhärters **AH**, zu benutzen.

Selbstverständlich können auch weitere Komponenten, beispielsweise Komponenten welche weitere Organosilane, Katalysatoren oder Farbstoffe enthalten Teil eines erfindungsgemässen Mehrkomponentensystems sein. Solche zusätzlichen Komponenten erlauben beispielsweise Optimierungen für besondere Haftsubstrate mittels zusätzlicher Organosilane oder anderer Additive oder sie können spezielle ästhetische Anforderungen erfüllen, wie beispielsweise Farbe oder sie erlauben den Zusatz besonderer Stabilisatoren, wie UV-Stabilisatoren, die für einen generellen Einsatz zu teuer oder unnötig wären.

Eine besonders bevorzugte Ausführungsform einer mindestens zweikomponentigen Haftvermittlerzusammensetzung gemäss der vorliegenden Erfindung umfasst:
- eine erste Komponente **KA**, enthaltend
   a) 75 bis 95 Gew.-% einer wässrigen Dispersion mindestens eines Epoxidfestharzes **EP** mit einem Festkörpergehalt von 50 bis 60%, bezogen auf die wässrige Dispersion;
   b) 0.5 bis 2 Gew.-% mindestens eines Aminosilans **AS**; sowie
   c) 0.5 bis 5 Gew.-% mindestens einer Säure **HS**, sowie
   d) so viel Wasser, dass die Summe der einzelnen Bestandteile a) bis d) der Komponente **KA** 100 Gew.-% ergeben; und
- eine zweite Komponente **KB**, enthaltend
   a) 5 bis 35 Gew.-% einer wässrigen Dispersion mindestens eines Aminhärters **AH** mit einem Festkörpergehalt von 75 bis 85 % bezogen auf die wässrige Dispersion;
   b) 0.5 bis 10 Gew.-% mindestens einer anorganischen Base **BA**;
   c) 0 bis 35 Gew.-% Russ und/oder Pigmente;
   d) 0 bis 0.5 Gew.-% mindestens eines Silankatalysators;
   e) 0 bis 2 Gew.-% mindestens eines Netzmittels; sowie
   f) so viel Wasser, dass die Summe der einzelnen Bestandteile a) bis f) der Komponente **KB** 100 Gew.-% ergeben.

Bei solchen mindestens zweikomponentigen Haftvermittlerzusammensetzungen hat sich insbesondere ein VolumenMischverhältnis von **KA**:**KB** von zwischen 1:1 und 4:1 als besonders vorteilhaft erwiesen.

Allgemein ist es bevorzugt, das Verhältnis der Epoxidäquivalente des Epoxidfestharzes **EP** in Komponente **KA** zu den Aminwasserstoffäquivalenten des Aminhärters **AH** in Komponente **KB** so zu wählen, dass ein leichter Überschuss an Epoxidäquivalenten vorliegt. Dies bedeutet beispielsweise, dass bevorzugt 1 bis 10 % Überschuss an Epoxidäquivalenten vorliegt.

Eine andere besonders bevorzugte Ausführungsform ist eine einkomponentige Zusammensetzung, die eine einzelne Komponente **KAB** umfasst, welche Folgendes enthält:
a) 35 bis 50 Gew.-% einer wässrigen Dispersion mindestens eines Epoxidfestharzes **EP** mit einem Festkörpergehalt von 50 bis 60%, bezogen auf die wässrige Dispersion;
b) 0.25 bis 1 Gew.-% mindestens eines Aminosilans **AS**;
c) 0.25 bis 2.5 Gew.-% mindestens einer wasserlöslichen Carbonsäure **CHS**;
d) 1 bis 10 Gew.-% einer wässrigen Dispersion mindestens eines Aminhärters **AH** mit einem Festkörpergehalt von 75 bis 85 % bezogen auf die wässrige Dispersion; sowie
e) so viel Wasser, dass die Summe der einzelnen Bestandteile a) bis e) der Komponente **KAB** 100 Gew.-% ergeben.

Die einzelnen Komponenten werden nach der Herstellung typischerweise getrennt voneinander in dichte Verpackungen verpackt. Als Verpackungsmaterial eignen sich insbesondere Kunststoffe, wie beispielsweise Polyethylen oder Polypropylen, säurefeste Metalle, metallbeschichtete Kunststoffe, oder Glas, wobei Kunststoffbehälter bevorzugt sind. Die erfindungsgemässen wässrigen Zusammensetzungen oder ihre Komponenten sind selbstverständlich nicht empfindlich gegenüber Luftfeuchtigkeit und müssen nicht in besonders dichten, insbesondere gasdichten Verpackungen gelagert werden. Allerdings muss darauf geachtet werden, dass nicht wesentliche Mengen von Wasser aus den Behältern verdunsten oder unerwünschte Fremdstoffe in die Behälter eindringen können. Die einzelnen Komponenten sind getrennt voneinander lagerstabil. Die Lagerung der erfindungsgemässen Haftvermittlerzusammensetzung erfolgt insbesondere bei Temperaturen im Bereich von 5 bis 30°C. Dies gewährleistet die Stabilität der wässrigen Dispersion des Epoxid-Festharzes.

Weiterhin betrifft die vorliegende Erfindung die Verwendung einer Haftvermittlerzusammensetzung, wie sie vorhergehend beschrieben worden ist, als Voranstrich für Klebstoffe, Dichtstoffe oder Beschichtungen.
Die Verwendung einer derartigen Haftvermittlerzusammensetzung verbessert die Haftung des Klebstoffs, Dichtstoffs oder der Beschichtung bei feuchtwarmen Bedingungen, insbesondere nach Kataplasma-Lagerung. Vorzugsweise wird die Haftvermittlerzusammensetzung als Voranstrich für Kleb- oder Dichtstoffe verwendet.

Die Applikation der erfindungsgemässen Haftvermittlerzusammensetzung erfolgt typischerweise mittels Tuch, Filz, Rolle, Sprühen, Schwamm, Pinsel, Tauchbeschichten oder dergleichen und kann sowohl manuell als auch mittels Roboter erfolgen.
Handelt es sich bei der Haftvermittlerzusammensetzung um eine mehrkomponentige Haftvermittlerzusammensetzung, erfolgt vor oder während der Applikation das Mischen der Komponenten.

Im Detail besteht ein bevorzugtes Verfahren zur Applikation einer erfindungsgemässen zweikomponentigen Haftvermittlerzusammensetzung typischerweise aus folgenden Schritten:
a) Mischen der Komponenten **KA** und **KB** durch Vereinigen der beiden Komponenten, bevorzugt indem die Komponente **KB** in das Gefäss der Komponenten **KA** geschüttet wird, sowie anschliessendes Rühren und/oder Schütteln der entstehenden Mischung;
b) Auftragen der Mischung aus den Komponenten **KA** und **KB** auf die zu verklebende oder zu beschichtende Fläche, bevorzugt mittels eines getränkten Schwamms, Pinsels oder Filzes oder mittels Sprühen;
c) Ablüften der aufgetragenen Haftvermittlerzusammensetzung bis das vorhandene Wasser mindestens teilweise verdunstet ist, bevorzugt beschleunigt durch Einsatz eines Ventilators oder Föhns;
d) Auftragen des Kleb- oder Dichtstoffs auf die durch Schritte a) bis c) vorbehandelte Klebefläche.

Nach der Applikation erfolgt wie unter Punkt c) beschrieben üblicherweise das Ablüften der Haftvermittlerzusammensetzung. Das Ablüften kann unter atmosphärischen Bedingungen oder allenfalls bei erhöhter Temperatur, Unterdruck und/oder durch Anblasen mit einem Gas erfolgen, beispielsweise durch Einsatz eines Ventilators oder Föhns, was zu einer Verkürzung der Ablüftzeit führen kann. Die erfindungsgemässen Zusammensetzungen benötigen ohne weitere Vorkehrungen typischerweise Ablüftzeiten von zwischen 15 min und 2 h, wobei ein trockenes und/oder warmes Klima die Ablüftzeit verringert. Durch Einsatz einen Ventilators oder Föhns kann die Ablüftzeit problemlos auf höchstens 5 min, bevorzugt höchstens eine Minute verkürzt werden.

Erfindungsgemässe einkomponentige Haftvermittlerzusammensetzungen umfassend eine einzelnen Komponente **KAB** werden bevorzugt auch entsprechend dem obengenannten Verfahren verwendet, wobei unter Schritt a) selbstverständlich kein Mischprozess nötig ist, da es sich um eine bereits fertige Mischung handelt. Allerdings kann es vorteilhaft sein, die Komponente **KAB** vor der Applikation zu schütteln oder umzurühren, um eine möglichst gute Mischungshomogenität zu gewährleisten.

Die erfindungsgemässe Haftvermittlerzusammensetzung eignet sich für verschiedenartige Substrate wie beispielsweise Metalle und Legierungen, insbesondere Stähle, Aluminium und Buntmetalle sowie deren Legierungen, Beton, Mörtel, Backstein, Klinker, Naturstein, Glas, Keramik, Glaskeramik, Holz und Kunststoffe wie Polystyrol. Als Substrate bevorzugt sind anorganische Substrate, insbesondere Glas und Glaskeramik, Metalle, sowie Beton und Mörtel.
Die Substrate können bei Bedarf vor dem Applizieren der erfindungsgemässen Haftvermittlerzusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.

Als Kleb- oder Dichtstoff kann grundsätzlich jeder übliche Kleb- oder Dichtstoff verwendet werden. Insbesondere handelt es sich dabei um einen feuchtigkeitshärtenden Kleb- oder Dichtstoff.
Geeignete Kleb- und Dichstoffe sind insbesondere Polyurethankleb- und -dichtstoffe, insbesondere solche, welche Isocyanatgruppen aufweisende Polyurethanpolymere enthalten.
Weiterhin eignet sich die erfindungsgemässe Haftvermittlerzusammensetzung insbesondere auch für silanvernetzende Kleb- und Dichtstoffe.
Besonders geeignet ist die erfindungsgemässe Haftvermittlerzusammensetzung für elastische feuchtigkeitshärtende Klebstoffe, wie sie unter den Produktelinien Sikaflex®, SikaTack® und SikaBond® von Sika Schweiz AG kommerziell vertrieben werden.

Bevorzugte Anwendungsgebiete der erfindungsgemässen Haftvermittlerzusammensetzung liegen in der Bau- und Fertigungsindustrie sowie im Fahrzeugbau, insbesondere zur Fugenabdichtung, Parkettverklebung, Anbauteilverklebung, Nahtabdichtung, Hohlraumversiegelung, Montage, Karosserieverklebung, Scheibenverklebung und dergleichen.

Weiterhin betrifft die vorliegende Erfindung Artikel, die mit Hilfe einer erfindungsgemässen Haftvermittlerzusammensetzung verklebt oder beschichtet wurden, oder zum Verkleben oder Beschichten vorbehandelt wurden.

Artikel, welche aus dem Verkleben, Abdichten oder Beschichten eines Substrats unter Verwendung einer erfindungsgemässen Haftvermittlerzusammensetzung hervorgehen, sind beispielsweise Bauwerke, insbesondere Bauwerke des Hoch- oder Tiefbaus, Transportmittel, beispielsweise Fahrzeuge, insbesondere Automobile, Busse, Lastkraftwagen, Schienenfahrzeuge oder Schiffe, oder Anbauteile davon. Bevorzugt wird die erfindungsgemässe Haftvermittlerzusammensetzung eingesetzt für elastische Verklebungen im Fahrzeugbau, wie beispielsweise das Ankleben von Teilen, wie Kunststoffabdeckungen, Zierleisten, Flansche, Stossstangen, Führerkabinen oder andere Anbauteile, an die lackierte Karosserie eines Transportmittels, oder das Einkleben von Scheiben in die Karosserie.

### Beispiele

Im Folgenden sind Ausführungsbeispiele aufgeführt, welche die beschriebene Erfindung näher erläutern sollen.

### Verwendete Rohstoffe

Gängige Chemikalien, die als Reinsubstanzen unter ihrer chemischen Bezeichnung in den Handel kommen, wie zum Beispiel Phosphorsäure, wurden von Sigma Aldrich Schweiz bezogen. Die unter einem Handelsnamen bekannten Chemikalien sind im Folgenden aufgelistet. Als Wasser wurde stets laborübliches deionisiertes Wasser eingesetzt.
- A-1110: 3-Aminopropyl-trimethoxysilan Silquest® A-1110, Momentive Performance Materials, Deutschland
- A-1120: N-(2-Aminoethyl)-3-aminopropyl-trimethoxysilan Silquest® A-1120, Momentive Performance Materials, Deutschland
- A-1130: Diethylenetriaminopropyl-trimethoxysilan Silquest® A-1130, Momentive Performance Materials, Deutschland
- A-1170: Bis(trimethoxysilylpropyl)amin Silquest® A-1170, Momentive Performance Materials, Deutschland
- A-187: 3-Glycidoxypropyl-trimethoxysilan Silquest® A-187, Momentive Performance Materials, Deutschland
- A-189: 3-Mercaptopropyl-trimethoxysilan Silquest® A-189, Momentive Performance Materials, Deutschland
- Hydropalat 3031: Tensid, Hydropalat® 3031, Cognis, Deutschland
- AR555: Wässrige Dispersion eines Epoxidfestharzes mit 55 % Festkörperanteil, Ancarez® AR555, AirProducts, USA
- Beckopox 623: Aliphatisches Polyaminaddukt, wässrige Dispersion mit 80 % Festkörperanteil, Beckopox® EH 623 W, Allnex, Deutschland
- Russ: Russ, low colour furnace black, Printex® 25, Evonik Industries, Deutschland
- Dispergiermittel: Copolymerzubereitung, Disperbyk®-191, Byk Chemie, Deutschland
- Entschäumer: Polymerzubereitung, Byk®-014, Byk Chemie, Deutschland
- Katalysator: Dibutylzinndilaurat (DBTL), TIB KAT® 218, TIB Chemicals, Deutschland

### Herstellung der Haftvermittlerzusammensetzungen

### Herstellung der Komponenten KA für zweikomponentige Haftvermittler

Es wurden eine Reihe erfindungsgemässer (KA1 bis KA3) sowie zwei nicht erfindungsgemässe (KA4 und KA5) Komponenten **KA** hergestellt. Die Mengen der einzelnen Zutaten sind in Tabelle 1 in Gew.-% aufgeführt. KA4 ist nicht erfindungsgemäss weil sie kein Aminosilan **AS** enthält, KA5 ist nicht erfindungsgemäss weil sie keine Säure **HS** oder **CHS** enthält.

**Tabelle 1: Erfindungsgemässe und nicht erfindungsgemässe Komponenten KA die für die entsprechenden Beispielzusammensetzungen hergestellt wurden. Alle Mengenangaben in Gew.-% bezogen auf die gesamte jeweilige Komponente KA.**

| | **KA1** | **KA2** | **KA3** | **KA4 (Ref.)** | **KA5 (Ref.)** |
|---|---|---|---|---|---|
| AR555 | 89 | 89 | 89 | 94 | 90 |
| Wasser | - | - | - | 2 | - |
| Essigsäure | 1 | 1 | 1 | - | - |
| Silanmischung ES1 | - | - | - | 4 | - |
| Silanmischung AS1 | 10 | - | - | - | - |
| Silanmischung AS2 | - | 10 | - | - | - |
| Silanmischung AS3 | - | - | 10 | - | - |
| Silanmischung AS4 | - | - | - | - | 10 |
| Total (Gew.-%) | 100 | 100 | 100 | 100 | 100 |

Die Herstellung der Komponenten **KA** war in allen Fällen identisch. Zunächst wurde AR-555 in einen Reaktor gegeben und unter Rühren die Essigsäure (Eisessig; Sigma Aldrich Schweiz) oder das zusätzliche Wasser (im Falle von KA4 zugegeben). Danach wurde unter starkem Rühren die jeweilige Silanmischung langsam zugegeben. Es entstand in allen Fällen eine homogene, aber intransparente milchige Flüssigkeit.

### Herstellung der Silanmischungen

Eine Reihe von Silanmischungen zur Verwendung in Komponente **KA** wurden nach den in Tabelle 2 angegebenen Zusammensetzungen in Gew.-% bezogen auf die jeweiliegen Silanmischungen hergestellt. Diese Silanmischungen wurden dann entweder als erfindungsgemässe Aminosilane **AS** den entsprechenden Komponenten **KA** zugegeben, oder sie dienten als Additiv für Referenzzusammensetzungen.

**Tabelle 2: Beispielhafte Silanmischungen die in den Komponenten KA eingesetzt wurden. Alle Mengenangaben in Gew.-% bezogen auf die gesamte jeweilige Silanmischung.**

| | **ES1** | **AS1** | **AS2** | **AS3** | **AS4** |
|---|---|---|---|---|---|
| Wasser | 55 | 70 | 77.5 | 77.5 | 80 |
| H₃PO₄ | 5 | 15 | 10 | - | - |
| H₂SO₄ | - | - | - | 10 | - |
| Kaliumhydroxid | - | - | - | - | 10 |
| Hydropalat 3031 | - | 5 | 2.5 | 2.5 | - |
| A-1110 | - | 2.22 | 2.86 | 2.86 | 2.86 |
| A-1120 | - | 2.22 | 2.86 | 2.86 | 2.86 |
| A-1170 | - | 2.22 | 2.86 | 2.86 | 2.86 |
| A-189 | - | 1.11 | 1.43 | 1.43 | 1.43 |
| A-187 | 40 | - | - | - | - |
| A-1130 | - | 2.22 | - | - | - |
| Total (Gew.-%) | 100 | 100 | 100 | 100 | 100 |

Die Herstellung der Silanmischungen AS1 bis AS4 erfolgte nach identischem Schema: Zunächst wurden die allenfalls vorhandene Säure oder Base, Hydropalat 3031 und Wasser vorgemischt. In diese Mischung wurden unter Stickstoffatmosphäre bei 23 °C die einzelnen Silane langsam unter Rühren zugetropft. Dabei wurde darauf geachtet, dass die Silane langsam zugegeben wurde und die Lösung klar blieb. Nach Zugabe aller Silane wurde noch eine Stunde nachgerührt. In allen Fällen wurde eine klare, farblose Mischung erhalten. Im Falle von ES1 wurde A-187 als letzter Rohstoff zugegeben.

### Herstellung der Komponenten KB für zweikomponentige Haftvermittler

Es wurden eine Reihe erfindungsgemässer (KB1 bis KB5) sowie eine nicht erfindungsgemässe (KB6) Komponenten **KB** hergestellt. Die Mengen der einzelnen Zutaten sind in Tabelle 3 in Gew.-% aufgeführt. KB6 ist nicht erfindungsgemäss weil sie keine anorganische Base **BA** enthält.

**Tabelle 3: Erfindungsgemässe und nicht erfindungsgemässe Komponenten KB die für die entsprechenden Beispielzusammensetzungen hergestellt wurden. Alle Mengenangaben in Gew.-% bezogen auf die gesamte jeweilige Komponente KB.**

| | **KB1** | **KB2** | **KB3** | **KB4** | **KB5** | **KB6 (Ref.)** |
|---|---|---|---|---|---|---|
| Beckopox 623 | 27.8 | 7.7 | 7.7 | 7.7 | 7.7 | 30.76 |
| Wasser | 67.7 | 78.15 | 66.75 | 90.64 | 71.4 | 69.24 |
| Ca(OH)₂ | 4.5 | 1.15 | 1 | - | - | - |
| Ba(OH)₂ | - | - | - | 1.66 | - | - |
| Mg(OH)₂ | - | - | - | - | 0.8 | - |
| Russ | - | 12 | 24 | - | 20 | - |
| Dispergiermittel | - | 1 | 0.5 | - | - | - |
| Entschäumer | - | - | 0.03 | - | 0.05 | - |
| Katalysator | - | - | 0.02 | - | 0.05 | - |
| Total (Gew.-%) | 100 | 100 | 100 | 100 | 100 | 100 |

Die Herstellung der Beispielkomponenten **KB** erfolgte immer nach folgendem Schema: Es wurde zunächst der Aminhärter **AH** (Beckopox 623) mit ungefähr der Hälfte des Wassers in einem Reaktor gemischt, was eine Abnahme der Viskosität und ein erleichtertes Rühren zur Folge hatte. Danach wurde der Rest des Wassers mit der darin gelösten anorganischen Base **BA**, sowie wo vorhanden darin dispergiertem Russ, Dispergiermittel, Entschäumer und Katalysator unter Rühren langsam zugegeben. Die Mischung wurde noch ca 15 min weitergerührt bis eine homogene farblose oder, falls Russ enthalten, schwarze Mischung erhalten wurde.

### Herstellung der Komponenten KAB für einkomponentige Haftvermittler

Es wurden eine erfindungsgemässe einzelne Komponente KAB1 sowie eine nicht erfindungsgemässe einzelne Komponente KAB2 hergestellt. Die Bestanteile in Gew.-% der einzelnen Komponenten KAB1 und KAB2 sind in Tabelle 4 aufgeführt. KAB2 ist nicht erfindungsgemäss, weil keine wasserlösliche Carbonsäure **CHS** enthalten ist.

**Tabelle 4: Erfindungsgemässe und nicht erfindungsgemässe Komponenten KAB die für die entsprechenden Beispielhaftvermittlerzusammensetzungen hergestellt wurden. Alle Mengenangaben in Gew.-% bezogen auf die gesamte jeweilige Komponente KAB.**

| | **KAB1** | **KAB2 (Ref.)** |
|---|---|---|
| AR555 | 61 | 61 |
| A-1110 | 0.45 | 0.45 |
| A-1120 | 0.45 | 0.45 |
| A-1170 | 0.45 | 0.45 |
| A-189 | 0.15 | 0.15 |
| Beckopox 623 | 6 | 6 |
| Wasser | 29.5 | 31.5 |
| Essigsäure | 2 | - |
| Total (Gew.-%) | 100 | 100 |

Die Herstellung von KAB1 erfolgte in mehreren Schritten. Zunächst wurde ungefähr die Hälfte des zu verwendenden Wassers mit der Hälfte der Essigsäure in einem Glaskolben vorgelegt. Die Silane wurden danach langsam zugegeben und die Mischung geschüttelt. Danach wurde AR555 in einem Reaktor vorgelegt und die Silanmischung zugegeben. Unter Rühren wurden alle Zutaten vermischt. In einem zweiten Reaktor wurde Beckopox 623 mit dem Rest des Wassers ebenfalls verdünnt und einige Minuten gerührt. Danach wurde der Rest der Essigsäure beigegeben und weitergerührt. Anschliessend wurde der Inhalt des zweiten Reaktors mit dem Aminhärter zum Inhalt des ersten Reaktors beigefügt. Die Mischung wurde eine Stunde weitergerührt, bis eine milchige, homogene Mischung erhalten wurde.

KAB2 wurde in einem fast identischen Verfahren hergestellt, ausser dass die Essigsäure durch Wasser ersetzt wurde. Es wurde ebenfalls eine milchige, homogene Mischung erhalten. Diese gelierte jedoch innerhalb von vier Wochen nach Herstellung und konnte nur frisch verwendet werden.

### Herstellung der einsatzbereiten ein- oder zweikomponentigen Haftvermittlerzusammensetzungen

Für die Herstellung der zweikomponentigen Haftvermittlerzusammensetzungen wurden die jeweiligen Komponenten **KA** und **KB** im geeigneten Volumenverhältnis gemischt. Wo bei den Haftresultaten nichts anderes angegeben wird, beträgt dieses Verhältnis stets 1:1. Die Mischung erfolgte durch zusammenschütten und anschliessendem Schütteln während 5 Minuten. Die Einzelkomponente **KAB** wurde lediglich vor Anwendung während 5 Minuten geschüttelt. Die fertigen Haftvermittlerzusammensetzungen werden mit Z1 bis Z14 bezeichnet und sind in Tabelle 5 und in den Tabellen zu den Haftungsresultaten angegeben.

**Tabelle 5: Fertig gemischte erfindungsgemässe und nicht erfindungsgemässe (Referenz-) Haftvermittlerzusammensetzungen Z1 bis Z14, bestehend aus den jeweiligen Komponenten KA und KB oder KAB.**

| Haftvermittlerzusammensetzung | **KA** | **KB** | **KAB** |
|---|---|---|---|
| Z1 | KA1 | KB1 | - |
| Z2 | KA2 | KB1 | - |
| Z3 | KA2 | KB2 | - |
| Z4 | KA2 | KB3 | - |
| Z5 | KA2 | KB4 | - |
| Z6 | KA2 | KB5 | - |
| Z7 (Ref.) | KA2 | KB6 | - |
| Z8 | KA3 | KB3 | - |
| Z9 (Ref.) | KA4 | KB1 | - |
| Z10 (Ref.) | KA4 | KB6 | - |
| Z11 (Ref.) | KA5 | KB3 | - |
| Z12 (Ref.) | KA5 | KB6 | - |
| Z13 | - | - | KAB1 |
| Z14 (Ref.) | - | - | KAB2 |

### Haftungstests für Haftvermittlung und Lagerstabilität

Die einzelnen fertigen wässrigen Haftvermittlerzusammensetzungen Z1 bis Z14 gemäss Tabelle 5 wurden hinsichtlich ihrer Haftvermittlung auf verschiedenen Substraten als Haftvermittler in Kombination mit verschiedenen Klebstoffen geprüft. Um die Lagerstabilität zu überprüfen, wurden einzelne Komponenten **KA**, **KB** oder **KAB** verschieden lange (bis 13 Monate) bei 23 °C gelagert. Um eine beschleunigte Alterung zu simulieren wurde in einigen Fällen eine Lagerung bei erhöhter Temperatur durchgeführt.

Als Klebstoffe für die Testverklebungen wurden SikaTack® MOVE^{IT} ("Move"), Sikaflex®-205 HMA-3 ("HMA3"), Sikaflex®-250 HMV-2+ ("HMV2") und Sikaflex®-265 ("S256") verwendet, bei denen es sich um einkomponentige feuchtigkeitshärtende Polyurethanklebstoffe handelt, welche Polyurethanpräpolymere mit Isocyanatgruppen enthalten und bei Sika Schweiz AG kommerziell erhältlich sind.

Als Substrate wurden Float-Glas (zinnseitig "F-Sn" oder luftseitig "F-Luft"), Ferro Frit 14251 ("14251"), Ferro Frit 3402 ("3402")und Ferro Frit 14279 ("14279") verwendet. Die erwähnten Glassubstrate werden durch Rocholl AG, Deutschland, vertrieben. Es sind Laborsubstrate, die den marktüblichen Glaskeramiken für VSG und ESG Gläser entsprechen. Ferro ist der Hersteller der Glaskeramikpaste, die Nummern sind die Typenbezeichnung der verwendeten Keramik.

Die wässrigen Zusammensetzungen wurden mittels eines damit getränkten Melaminschwamms auf das jeweilige Substrat aufgetragen und 60 Minuten abgelüftet. Eine Dreiecksraupe von dem Klebstoff wurde unter Normklimabedingungen (23±1°C, 50±5% relative Luftfeuchtigkeit) mittels Auspresskartusche und Düse aufgetragen.

Die Verklebung wurde nach einer Aushärtezeit von normalerweise 7 Tagen Klimaraumlagerung unter Normklimabedingungen bei 23 °C ("RT") und 50 % rel. Luftfeuchtigkeit sowie nach einer anschliessenden Kataplasma-Lagerung ("CP") bei 70°C, 100 % rel. Luftfeuchtigkeit während bis zu 21 Tagen, getestet. Die genauen Bedingungen der Lagerung und die jeweiligen Lagerzeiten sind in den entsprechenden Tabellen angegeben.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Anbringen eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche.

Je höher der Anteil an kohäsivem Bruch ist, umso besser wird die Verklebung eingeschätzt. Testresultate mit Kohäsionsbrüchen von weniger als 70 % gelten typischerweise als ungenügend. Ein Kohäsionsbruch von 0% entspricht einem 100% Adhäsionsbruch mit komplettem Versagen der Verklebung und damit des Haftvermittlers. Die Ergebnisse (Zahlen in % kohäsiver Bruch) sind in den Tabellen 6a bis 14b zusammengefasst.

**Tabelle 6a: Vergleich der erfindungsgemässen Haftvermittlerzusammensetzungen Z4 und Z8 mit der nicht erfindungsgemässen Z7 mittels Verklebungen verschiedener Substrate unter Einsatz verschiedener Klebstoffe nach 7d (Tagen) RT und 7d RT + 7d CP.**

| **Lagerung** | | **7d RT** | | | | **7d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z4** | *F-Sn* | 100 | 100 | 100 | 100 | 100 | 100 | 100 | 100 |
| | *F-Luft* | 100 | 100 | 100 | 100 | 100 | 100 | 100 | 100 |
| | *3402* | 100 | 100 | 100 | 100 | 100 | 100 | 100 | 100 |
| | *14251* | 100 | 100 | 100 | 100 | 100 | 100 | 100 | 100 |
| | *14279* | 100 | 100 | 100 | 100 | 100 | 100 | 100 | 100 |
| **Z8** | *F-Sn* | 100 | 100 | 100 | 100 | 100 | 100 | 100 | 100 |
| | *F-Luft* | 100 | 100 | 100 | 100 | 100 | 100 | 100 | 0 |
| | *3402* | 100 | 100 | 100 | 100 | 100 | 99 | 100 | 100 |
| | *14251* | 100 | 100 | 100 | 100 | 100 | 100 | 100 | 10 |
| | *14279* | 100 | 100 | 100 | 100 | 100 | 90 | 100 | 100 |
| **Z7** (Ref.) | *F-Sn* | 10 | 10 | 50 | 100 | 0 | 0 | 0 | 0 |
| | *F-Luft* | 10 | 10 | 30 | 100 | 0 | 0 | 0 | 0 |
| | *3402* | 10 | 70 | 30 | 100 | 100 | 100 | 100 | 100 |
| | *14251* | 10 | 70 | 50 | 100 | 0 | 0 | 0 | 0 |
| | *14279* | 10 | 30 | 10 | 100 | 0 | 0 | 95 | 80 |

**Tabelle 6b: Vergleich der erfindungsgemässen Haftvermittlerzusammensetzungen Z4 und Z8 mit der nicht erfindungsgemässen Z7 mittels Verklebungen verschiedener Substrate unter Einsatz verschiedener Klebstoffe nach 7d RT + 14d CP und 7d RT + 21d CP.**

| **Lagerung** | | **14d CP** | | | | **21d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z4** | *F-Sn* | 100 | 100 | 100 | 100 | 100 | 100 | 100 | 100 |
| | *F-Luft* | 100 | 100 | 100 | 100 | 100 | 100 | 100 | 100 |
| | *3402* | 100 | 100 | 100 | 100 | 100 | 100 | 100 | 100 |
| | *14251* | 100 | 100 | 100 | 100 | 100 | 100 | 100 | 100 |
| | *14279* | 100 | 100 | 100 | 100 | 100 | 100 | 100 | 100 |
| **Z8** | *F-Sn* | 100 | 99 | 100 | 0 | 100 | 90 | 100 | 0 |
| | *F-Luft* | 100 | 99 | 100 | 0 | 99 | 90 | 100 | 0 |
| | *3402* | 100 | 30 | 100 | 10 | 100 | 0 | 100 | 10 |
| | *14251* | 100 | 80 | 100 | 0 | 99 | 90 | 95 | 0 |
| | *14279* | 100 | 20 | 100 | 10 | 100 | 0 | 100 | 0 |
| **Z7** (Ref.) | *F-Sn* | 0 | 0 | 0 | 0 | 0 | 0 | 0 | 0 |
| | *F-Luft* | 0 | 0 | 0 | 0 | 0 | 0 | 0 | 0 |
| | *3402* | 100 | 100 | 100 | 100 | 100 | 100 | 100 | 100 |
| | *14251* | 0 | 0 | 0 | 0 | 0 | 0 | 0 | 0 |
| | *14279* | 0 | 0 | 95 | 80 | 0 | 0 | 90 | 50 |

Tabellen 6a und 6b zeigen, dass die erfindungsgemässen Haftvermittlerzusammensetzungen Z4 und Z8 der nicht erfindungsgemässen Z7 deutlich überlegen sind, besonders nach Kataplasma-Lagerung.

**Tabelle 7a: Vergleich der erfindungsgemässen Haftvermittlerzusammensetzung Z1 mit der nicht erfindungsgemässen Z10 mittels Verklebungen verschiedener Substrate unter Einsatz verschiedener Klebstoffe nach 7d (Tagen) RT und 7d RT + 7d CP. Volumenmischverhältnis KA zu KB war in beiden Fällen Z1 und Z10 4:1.**

| **Lagerung** | | **7d RT** | | | | **7d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z1** | *F-Sn* | 100 | 99 | 100 | 100 | 100 | 100 | 100 | 100 |
| | *14279* | 90 | 99 | 100 | 100 | 100 | 100 | 100 | 100 |
| | *14251* | 100 | 100 | 100 | 100 | 100 | 100 | 100 | 100 |
| | *3402* | 99 | 100 | 100 | 100 | 90 | 95 | 100 | 100 |
| **Z10** (Ref.) | *F-Sn* | 0 | 0 | 30 | 10 | 0 | 0 | 0 | 100 |
| | *14279* | 100 | 20 | 100 | 100 | 0 | 0 | 0 | 50 |
| | *14251* | 100 | 100 | 100 | 100 | 0 | 0 | 0 | 20 |
| | *3402* | 100 | 100 | 100 | 100 | 0 | 0 | 0 | 0 |

**Tabelle 7b: Vergleich der erfindungsgemässen Haftvermittlerzusammensetzung Z1 mit der nicht erfindungsgemässen Z10 mittels Verklebungen verschiedener Substrate unter Einsatz verschiedener Klebstoffe nach 7d RT + 14d CP und 7d RT + 21d CP. Volumenmischverhältnis KA zu KB war in beiden Fällen Z1 und Z10 4:1.**

| **Lagerung** | | **14d CP** | | | | **21d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z1** | *F-Sn* | 95 | 100 | 100 | 99 | 70 | 60 | 90 | 95 |
| | *14279* | 99 | 99 | 99 | 100 | 95 | 95 | 99 | 99 |
| | *14251* | 95 | 100 | 100 | 100 | 50 | 99 | 100 | 100 |
| | *3402* | 20 | 70 | 100 | 100 | 10 | 20 | 100 | 100 |
| **Z10** (Ref.) | *F-Sn* | 0 | 0 | 0 | 80 | 0 | 0 | 0 | 50 |
| | *14279* | 0 | 0 | 0 | 20 | 0 | 0 | 0 | 30 |
| | *14251* | 0 | 0 | 0 | 0 | 0 | 0 | 0 | 0 |
| | *3402* | 0 | 0 | 0 | 0 | 0 | 0 | 0 | 0 |

Der Vergleich der erfindungsgemässen Z1 mit der nicht erfindungsgemässen Z10 (ohne Aminosilan **AS** und ohne anorganische Base **BA**) in Tabellen 7a und 7b zeigt deutlich die Überlegenheit der erfindungsgemässen Haftvermittlerzusammensetzung.

**Tabelle 8a: Vergleich der erfindungsgemässen Haftvermittlerzusammensetzungen Z2 und Z3 mittels Verklebungen verschiedener Substrate unter Einsatz verschiedener Klebstoffe nach 7d (Tagen) RT und 7d RT + 7d CP. Volumenmischverhältnis KA zu KB war bei Z2 4:1.**

| **Lagerung** | | **7d RT** | | | | **7d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z2** | *F-Sn* | 100 | 100 | 100 | 100 | 100 | 100 | 100 | 100 |
| | *14279* | 100 | 100 | 100 | 100 | 100 | 100 | 100 | 100 |
| | *14251* | 100 | 100 | 100 | 100 | 100 | 100 | 100 | 100 |
| | *3402* | 100 | 100 | 100 | 100 | 100 | 100 | 100 | 100 |
| **Z3** | *F-Sn* | 100 | 100 | 100 | 100 | 100 | 100 | 100 | 100 |
| | *14279* | 100 | 100 | 100 | 100 | 100 | 100 | 100 | 100 |
| | *14251* | 100 | 100 | 100 | 100 | 100 | 100 | 100 | 100 |
| | *3402* | 100 | 100 | 100 | 100 | 100 | 100 | 100 | 100 |

**Tabelle 8b: Vergleich der erfindungsgemässen Haftvermittlerzusammensetzung Z2 und Z3 mittels Verklebungen verschiedener Substrate unter Einsatz verschiedener Klebstoffe nach 7d RT + 14d CP und 7d RT + 21d CP. Volumenmischverhältnis KA zu KB war bei Z2 4:1.**

| **Lagerung** | | **14d CP** | | | | **21d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z2** | *F-Sn* | 100 | 100 | 100 | 100 | 100 | 100 | 100 | 100 |
| | *14279* | 99 | 99 | 100 | 100 | 99 | 100 | 100 | 100 |
| | *14251* | 100 | 100 | 100 | 100 | 100 | 100 | 100 | 50 |
| | *3402* | 100 | 100 | 100 | 100 | 100 | 100 | 100 | 100 |
| **Z3** | *F-Sn* | 100 | 100 | 100 | 100 | 100 | 100 | 100 | 100 |
| | *14279* | 100 | 100 | 100 | 100 | 100 | 100 | 100 | 100 |
| | *14251* | 100 | 100 | 100 | 100 | 100 | 100 | 100 | 90 |
| | *3402* | 100 | 100 | 100 | 100 | 100 | 100 | 100 | 100 |

Tabellen 8a und 8b zeigen, dass sowohl erfindungsgemässe Zusammensetzungen mit einem Mischverhältnis **KA:KB** von 1:1 (Z3) als auch solche mit einem Verhältnis von 4:1 (Z2) hervorragende Haftresultate ermöglichen.

**Tabelle 9a: Vergleich der erfindungsgemässen Haftvermittlerzusammensetzungen Z5 und Z6 und der nicht erfindungsgemässen Z7 mittels Verklebungen verschiedener Substrate unter Einsatz verschiedener Klebstoffe nach 7d (Tagen) RT und 7d RT + 7d CP.**

| **Lagerung** | | **7d RT** | | | | **7d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z5** | *F-Sn* | 99 | 100 | 100 | 100 | 0 | 0 | 80 | 100 |
| | *F-Luft* | 100 | 100 | 100 | 100 | 0 | 0 | 95 | 100 |
| **Z6** | *F-Sn* | 100 | 100 | 100 | 100 | 20 | 70 | 30 | 100 |
| | *F-Luft* | 99 | 100 | 100 | 100 | 100 | 100 | 100 | 100 |
| **Z7** (Ref.) | *F-Sn* | 10 | 10 | 50 | 100 | 0 | 0 | 0 | 0 |
| | *F-Luft* | 10 | 10 | 30 | 100 | 0 | 0 | 0 | 0 |

**Tabelle 9b: Vergleich der erfindungsgemässen Haftvermittlerzusammensetzung Z5 und Z6 und der nicht erfindungsgemässen Z7 mittels Verklebungen verschiedener Substrate unter Einsatz verschiedener Klebstoffe nach 7d RT + 14d CP und 7d RT + 21d CP.**

| **Lagerung** | | **14d CP** | | | | **21d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z5** | *F-Sn* | 0 | 0 | 70 | 100 | 0 | 0 | 70 | 100 |
| | *F-Luft* | 0 | 0 | 70 | 100 | 0 | 0 | 50 | 100 |
| **Z6** | *F-Sn* | 70 | 30 | 20 | 100 | 30 | 10 | 80 | 100 |
| | *F-Luft* | 100 | 100 | 100 | 100 | 100 | 100 | 100 | 100 |
| **Z7** (Ref.) | *F-Sn* | 0 | 0 | 0 | 0 | 0 | 0 | 0 | 0 |
| | *F-Luft* | 0 | 0 | 0 | 0 | 0 | 0 | 0 | 0 |

Tabellen 9a und 9b zeigen, dass auch erfindungsgemässe Zusammensetzungen mit Barium- (Z5) und Magnesiumhydroxid (Z6) als anorganische Base **BA** gute Haftresultate zeigen. Die nicht erfindungsgemässe Z7 liefert deutlich schlechtere Resultate.

**Tabelle 10a: Vergleich der erfindungsgemässen Z8 mit den nicht erfindungsgemässen Haftvermittlerzusammensetzungen Z11 und Z12 mittels Verklebungen verschiedener Substrate unter Einsatz verschiedener Klebstoffe nach 3d (Tagen) RT und 3d RT + 7d CP. Volumenmischverhältnis KA zu KB war bei Z12 2:1.**

| **Lagerung** | | **7d RT** | | | | **7d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z8** | *F-Sn* | 100 | 100 | 100 | 100 | 100 | 100 | 100 | 100 |
| | *3402* | 100 | 100 | 100 | 100 | 100 | 99 | 100 | 100 |
| | *14251* | 100 | 100 | 100 | 100 | 100 | 100 | 100 | 10 |
| | *14279* | 100 | 100 | 100 | 100 | 100 | 90 | 100 | 100 |
| **Z11** (Ref.) | *F-Sn* | 100 | 100 | 100 | 100 | 0 | 10 | 70 | 10 |
| | *3402* | 100 | 100 | 100 | 100 | 0 | 0 | 0 | 90 |
| | *14251* | 100 | 100 | 100 | 100 | 0 | 0 | 0 | 10 |
| | *14279* | 100 | 100 | 100 | 100 | 0 | 0 | 0 | 50 |
| **Z12** (Ref.) | *F-Sn* | 100 | 100 | 100 | 100 | 0 | 0 | 50 | 10 |
| | *3402* | 100 | 100 | 100 | 100 | 0 | 0 | 0 | 0 |
| | *14251* | 100 | 100 | 100 | 100 | 0 | 0 | 0 | 0 |
| | *14279* | 100 | 100 | 100 | 100 | 0 | 0 | 0 | 0 |

**Tabelle 10b: Vergleich der erfindungsgemässen Z8 mit den nicht erfindungsgemässen Haftvermittlerzusammensetzung Z11 und Z12 mittels Verklebungen verschiedener Substrate unter Einsatz verschiedener Klebstoffe nach 7d RT + 14d CP und 7d RT + 21d CP. Volumenmischverhältnis KA zu KB war bei Z12 2:1.**

| **Lagerung** | | **14d CP** | | | | **21d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z8** | *F-Sn* | 100 | 99 | 100 | 0 | 100 | 90 | 100 | 0 |
| | *3402* | 100 | 30 | 100 | 10 | 100 | 0 | 100 | 10 |
| | *14251* | 100 | 80 | 100 | 0 | 99 | 90 | 95 | 0 |
| | *14279* | 100 | 20 | 100 | 10 | 100 | 0 | 100 | 0 |
| **Z11** (Ref.) | *F-Sn* | 0 | 10 | 70 | 0 | 0 | 0 | 70 | 0 |
| | *3402* | 0 | 0 | 10 | 10 | 0 | 0 | 0 | 0 |
| | *14251* | 0 | 0 | 0 | 0 | 0 | 0 | 0 | 0 |
| | *14279* | 0 | 0 | 0 | 10 | 0 | 0 | 0 | 0 |
| **Z12** (Ref.) | *F-Sn* | 0 | 0 | 30 | 0 | 0 | 0 | 30 | 0 |
| | *3402* | 0 | 0 | 0 | 0 | 0 | 0 | 0 | 0 |
| | *14251* | 0 | 0 | 0 | 0 | 0 | 0 | 0 | 0 |
| | *14279* | 0 | 0 | 0 | 0 | 0 | 0 | 0 | 0 |

Aus den Tabellen 10a und 10b ist ersichtlich, dass nicht erfindungsgmässe Zusammensetzungen ohne Säure **HS** (Z11) und ohne Säure **HS** sowie ohne anorganische Base **BA** (Z12) besonders nach Kataplasma-Lagerung deutlich schlechtere Resultate liefern als eine vergleichbare erfindungsgemässe Zusammensetzung (Z8). Ausserdem gelieren die säurefreien Zusammensetzungen meist innerhalb weniger Wochen.

**Tabelle 11a: Vergleich der nicht erfindungsgemässen Z9 mit der erfindungsgemässen Haftvermittlerzusammensetzung Z1 mittels Verklebungen verschiedener Substrate unter Einsatz verschiedener Klebstoffe nach 3d RT + 14d CP und 3d RT + 21d CP und unter Einsatz verschieden hitzegealterter Komponenten. Volumenmischverhältnis KA zu KB war bei allen Zusammensetzungen 4:1. Die Temperaturangaben beziehen sich auf eine Lagerung der Komponente während 7 Tagen bei der angegebenen Temperatur. Substrat in allen Fällen Float-Glas zinnseitig.**

| | **Lagerung** | | **3d RT** | | | | **7d CP** | | | |
|---|---|---|---|---|---|---|---|---|---|---|
| **Bsp.** | ***KA*** | ***KB*** | Klebstoff | | | | Klebstoff | | | |
| | | | Move | HMA3 | HMV2 | S265 | Move | HMA3 | HMV2 | S265 |
| **Z9** (Ref.) | *RT* | *RT* | 95 | 95 | 100 | 100 | 0 | 0 | 0 | 5 |
| | *RT* | *40°C* | 99 | 99 | 100 | 100 | 0 | 0 | 0 | 20 |
| | *RT* | *60°C* | 40 | 95 | 95 | 95 | 0 | 0 | 0 | 60 |
| | *40°C* | *RT* | 20 | 95 | 95 | 100 | 0 | 0 | 0 | 40 |
| | *40°C* | *40°C* | 95 | 95 | 99 | 99 | 0 | 0 | 0 | 40 |
| | *40°C* | *60°C* | 95 | 90 | 95 | 100 | 0 | 0 | 0 | 50 |
| ***Z1*** | *RT* | *RT* | 99 | 99 | 99 | 100 | 100 | 100 | 100 | 100 |
| | *RT* | *40°C* | 70 | 80 | 80 | 99 | 100 | 100 | 100 | 100 |
| | *RT* | *60°C* | 30 | 95 | 100 | 100 | 90 | 80 | 80 | 100 |
| | *40°C* | *RT* | 95 | 100 | 100 | 100 | 100 | 90 | 100 | 100 |
| | *40°C* | *40°C* | 95 | 95 | 95 | 100 | 95 | 99 | 99 | 100 |
| | *40°C* | *60°C* | 95 | 99 | 99 | 100 | 95 | 80 | 100 | 100 |

**Tabelle 11b: Vergleich der nicht erfindungsgemässen Z9 mit der erfindungsgemässen Haftvermittlerzusammensetzung Z1 mittels Verklebungen verschiedener Substrate unter Einsatz verschiedener Klebstoffe nach 7d (Tagen) RT und 7d RT + 7d CP und unter Einsatz verschieden hitzegealterter Komponenten. Volumenmischverhältnis KA zu KB war bei allen Zusammensetzungen 4:1. Die Temperaturangaben beziehen sich auf eine Lagerung der Komponente während 7 Tagen bei der angegebenen Temperatur. Substrat in allen Fällen Float-Glas zinnseitig.**

| | **Lagerung** | | **14d CP** | | | | **21d CP** | | | |
|---|---|---|---|---|---|---|---|---|---|---|
| **Bsp.** | ***KA*** | ***KB*** | Klebstoff | | | | Klebstoff | | | |
| | | | Move | HMA3 | HMV2 | S265 | Move | HMA3 | HMV2 | S265 |
| **Z9** (Ref.) | *RT* | *RT* | 0 | 0 | 0 | 5 | 0 | 0 | 0 | 0 |
| | *RT* | *40°C* | 0 | 0 | 0 | 10 | 0 | 0 | 0 | 5 |
| | *RT* | *60°C* | 0 | 0 | 0 | 30 | 0 | 0 | 0 | 20 |
| | *40°C* | *RT* | 0 | 0 | 0 | 10 | 0 | 0 | 0 | 0 |
| | *40°C* | *40°C* | 0 | 0 | 0 | 20 | 0 | 0 | 0 | 5 |
| | *40°C* | *60°C* | 0 | 0 | 0 | 20 | 0 | 0 | 0 | 5 |
| ***Z1*** | *RT* | *RT* | 100 | 100 | 100 | 100 | 95 | 95 | 99 | 99 |
| | *RT* | *40°C* | 100 | 100 | 100 | 100 | 90 | 95 | 95 | 95 |
| | *RT* | *60°C* | 90 | 90 | 90 | 100 | 70 | 50 | 70 | 99 |
| | *40°C* | *RT* | 99 | 95 | 99 | 100 | 80 | 70 | 95 | 99 |
| | *40°C* | *40°C* | 95 | 99 | 99 | 100 | 80 | 90 | 99 | 99 |
| | *40°C* | *60°C* | 95 | 99 | 99 | 100 | 80 | 90 | 99 | 99 |

Tabellen 11a und 11b zeigen Haftresultate nach Hitzealterung (simulierte beschleunigte Alterung) der Komponenten **KA** und **KB** einer erfindungsgemässen (Z1) mit einer nicht erfindungsgemässen (Z9) Zusammensetzung. Die erfindungsgemässe Z1 zeigt in allen Kombinationen frischer und gealterter Komponenten eine sehr gute Haftvermittlung.

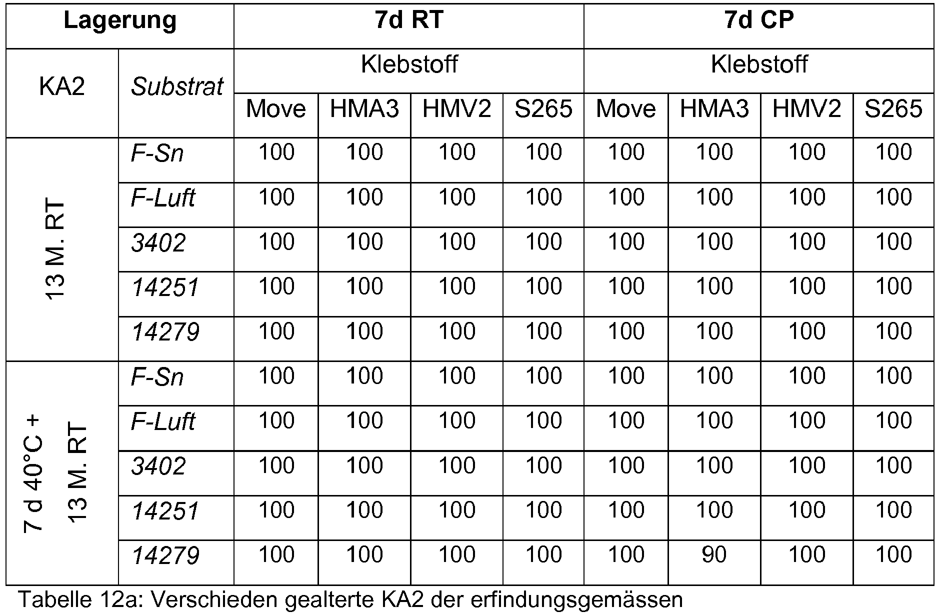

Haftvermittlerzusammensetzung Z4 getestet mittels Verklebungen verschiedener Substrate unter Einsatz verschiedener Klebstoffe nach 7d (Tagen) RT und 7d RT + 7d CP. Die Angaben in der ersten Spalte beschreiben die Alterung der KA2 (13 Monate RT oder 7 d 40 °C plus 13 Monate RT). KB3 war jeweils frisch.

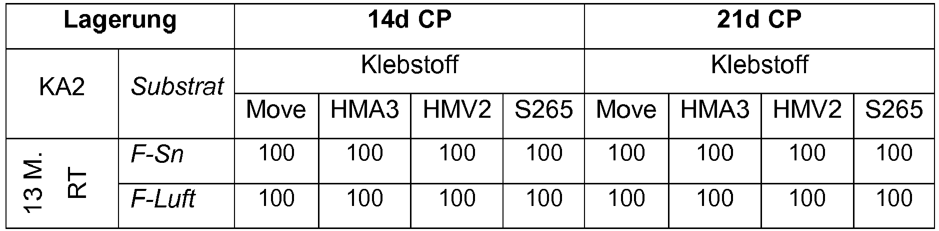

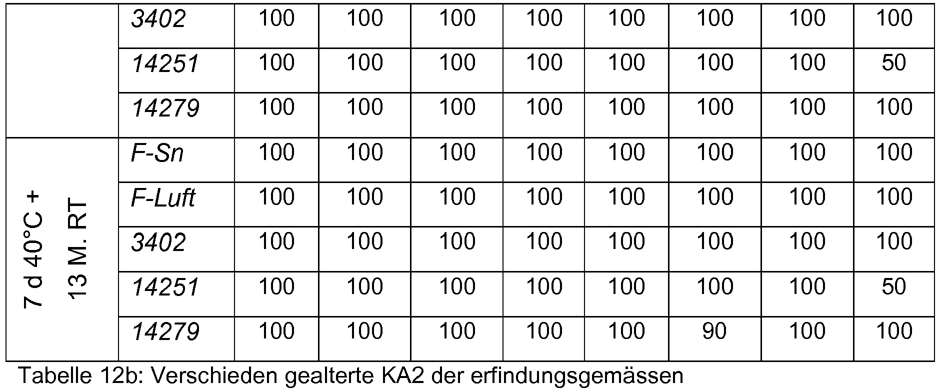

Haftvermittlerzusammensetzung Z4 getestet mittels Verklebungen verschiedener Substrate unter Einsatz verschiedener Klebstoffe nach 7d RT + 14d CP und 7d RT + 21d CP. Die Angaben in der ersten Spalte beschreiben die Alterung der KA2 (13 Monate RT oder 7 d 40 °C plus 13 Monate RT). KB3 war jeweils frisch.

Tabellen 12a und 12b zeigen deutlich, dass auch eine Lagerung über 13 Monate bei Raumtemperatur und sogar eine zusätzliche Hitzealterung der Komponente **KA** die Haftresultate einer erfindungsgemässen Zusammensetzung praktisch nicht beeinflusst.

**Tabelle 13: Testverklebungen mit unterschiedlichen Ablüftzeiten (1 min bis 30 min) und nach unterschiedlicher Lagerung der Testverklebung. In allen Fällen wurde Z4 als Haftvermittler, Float-Glas zinnseitig als Substrat und HMA3 als Klebstoff verwendet.**

| Lagerung | 1 min | 2 min | 5 min | 10 min | 15 min | 30 min |
|---|---|---|---|---|---|---|
| 7d RT | 100 | 100 | 100 | 100 | 100 | 100 |
| 7 d RT + 7d CP | 100 | 100 | 100 | 100 | 100 | 100 |
| 7 d RT + 14d CP | 100 | 100 | 100 | 100 | 100 | 100 |
| 7 d RT + 21d CP | 100 | 100 | 100 | 100 | 100 | 100 |

Tabelle 13 zeigt Haftresultate nach unterschiedlichen Ablüftzeiten unter Einsatz eines Ventilators. Für wässrige Zusammnesetzungen äusserst kurze Ablüftzeiten von höchstens 1 Minute können problemlos angewendet werden, ohne die Haftresultate negativ zu beeinflussen.

**Tabelle 14a: Vergleich der erfindungsgemässen Z13 mit der nicht erfindungsgemässen Haftvermittlerzusammensetzungen Z14 mittels Verklebungen verschiedener Substrate unter Einsatz verschiedener Klebstoffe nach 3d (Tagen) RT und 3d RT + 7d CP.**

| **Lagerung** | | **7d RT** | | | | **7d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z13** | *F-Sn* | 100 | 100 | 100 | 100 | 100 | 100 | 100 | 100 |
| | *3402* | 100 | 100 | 100 | 100 | 100 | 100 | 100 | 100 |
| | *14251* | 100 | 100 | 100 | 100 | 100 | 100 | 100 | 10 |
| | *14279* | 100 | 100 | 100 | 100 | 100 | 95 | 100 | 100 |
| **Z14** (Ref.) | *F-Sn* | 100 | 100 | 100 | 100 | 0 | 10 | 70 | 10 |
| | *3402* | 100 | 100 | 100 | 100 | 0 | 0 | 0 | 50 |
| | *14251* | 100 | 100 | 100 | 100 | 0 | 0 | 0 | 0 |
| | *14279* | 100 | 100 | 100 | 100 | 0 | 0 | 0 | 10 |

**Tabelle 14b: Vergleich der erfindungsgemässen Z13 mit der nicht erfindungsgemässen Haftvermittlerzusammensetzung Z14 mittels Verklebungen verschiedener Substrate unter Einsatz verschiedener Klebstoffe nach 7d RT + 14d CP und 7d RT + 21d CP.**

| **Lagerung** | | **14d CP** | | | | **21d CP** | | | |
|---|---|---|---|---|---|---|---|---|---|
| **Bsp.** | *Substrat* | Klebstoff | | | | Klebstoff | | | |
| | | Move | HMA3 | HMV2 | S265 | Move | HMA3 | HMV2 | S265 |
| **Z13** | *F-Sn* | 100 | 99 | 100 | 10 | 100 | 99 | 100 | 10 |
| | *3402* | 100 | 50 | 100 | 20 | 100 | 20 | 100 | 20 |
| | *14251* | 100 | 80 | 100 | 10 | 99 | 90 | 95 | 10 |
| | *14279* | 100 | 30 | 100 | 30 | 100 | 20 | 100 | 20 |
| **Z14** (Ref.) | *F-Sn* | 0 | 10 | 70 | 0 | 0 | 0 | 50 | 0 |
| | *3402* | 0 | 0 | 10 | 10 | 0 | 0 | 0 | 0 |
| | *14251* | 0 | 0 | 0 | 0 | 0 | 0 | 0 | 0 |
| | *14279* | 0 | 0 | 0 | 10 | 0 | 0 | 0 | 0 |

Tabellen 14a und 14b zeigen, dass auch die aus einer einzelnen Komponente **KAB** bestehende erfindungsgemässe Zusammensetzung Z13 sehr gute Haftresultate zeigt, während die nicht erfindungsgemässe Zusammensetzung Z14 (ohne wasserlösliche Carbonsäure **CHS**) nach Kataplasma-Lagerung versagt. Die Lagerstabilität der Z14 betrug ausserdem nur wenige Wochen, bis sie zu gelieren begann.

Die Haftresultate zeigen deutlich, dass die erfindungsgemässen Zusammensetzungen den nicht erfindungsgemässen Referenzbeispielen in allen Fällen weitaus überlagen sind, insbesondere nach Kataplasma-Lagerung. Dabei sind die erfindungsgemässen Zusammensetzungen über lange Zeiträume lagerstabil und können auch aus unterschiedlich alten Komponenten zusammengesetzt sein, ohne dass die Haftvermittlung beeinträchtigt wird.

## Patentansprüche

1. Wässrige Haftvermittlerzusammensetzung, umfassend
a) mindestens ein dispergiertes Epoxidfestharz **EP**;
b) mindestens ein Aminosilan **AS**;
c) mindestens eine Säure **HS**;
d) mindestens einen Aminhärter **AH**; sowie
e) Wasser.

2. Haftvermittlerzusammensetzung gemäss Anspruch 1, **dadurch gekennzeichnet, dass** die Haftvermittlerzusammensetzung mindestens zweikomponentig ist, umfassend
- eine erste Komponente **KA**, enthaltend
a) das mindestens eine dispergierte Epoxidfestharz **EP**;
b) das mindestens eine Aminosilan **AS**;
c) die mindestens eine Säure **HS**; sowie
e) Wasser; und
- eine zweite Komponente **KB**, enthaltend
a) den mindestens einen Aminhärter **AH**;
b) zusätzlich mindestens eine anorganische Base **BA**; sowie
c) Wasser.

3. Haftvermittlerzusammensetzung gemäss Anspruch 2, **dadurch gekennzeichnet, dass** die Säure **HS** und die anorganische Base **B**A zusammen in Wasser ein unlösliches Salz bilden.

4. Haftvermittlerzusammensetzung gemäss einem der Ansprüche 2 oder 3, **dadurch gekennzeichnet, dass** die anorganische Base **BA** mindestens ein Alkali- und/oder Erdakalihydroxid umfasst.

5. Haftvermittlerzusammensetzung gemäss einem der Ansprüche 2 bis 4, **dadurch gekennzeichnet, dass** die Säure **HS** eine oder mehrere Säuren aus der Gruppe H₃PO₄, H₂SO₄ oder wasserlösliche Carbonsäuren **CHS** umfasst.

6. Haftvermittlerzusammensetzung gemäss Anspruch 1, **dadurch gekennzeichnet, dass** die Haftvermittlerzusammensetzung aus einer einzelnen Komponente **KAB** besteht und die Säure **HS** mindestens eine wasserlösliche Carbonsäure **CHS** umfasst.

7. Haftvermittlerzusammensetzung gemäss einem der Ansprüche 5 oder 6, **dadurch gekennzeichnet, dass** die wasserlösliche Carbonsäure **CHS** Essigsäure umfasst.

8. Haftvermittlerzusammensetzung gemäss einem der vorhergehenden Ansprüche, **dadurch gekennzeichnet, dass** das Aminosilan **AS** mindestens ein Aminosilan mit mindestens einer primären und/oder mindestens einer sekundären Aminogruppe sowie mit mindestens einer Trimethoxysilangruppe umfasst.

9. Haftvermittlerzusammensetzung gemäss einem der vorhergehenden Ansprüche, **dadurch gekennzeichnet, dass** das dispergierte Epoxidfestharz **EP** mit einem Gehalt von 15 bis 35 Gew.-%, bezogen auf die gesamte Haftvermittlerzusammensetzung, enthalten ist.

10. Haftvermittlerzusammensetzung gemäss einem der vorhergehenden Ansprüche, **dadurch gekennzeichnet, dass** der Aminhärter **AH** mit einem Gehalt an Aminhärter von 0.5 bis 30 Gew.-%, bezogen auf die gesamte Haftvermittlerzusammensetzung, enthalten ist.

11. Haftvermittlerzusammensetzung gemäss einem der Ansprüche 2 bis 5 oder 8 bis 10, umfassend
- eine erste Komponente **KA**, enthaltend
a) 75 bis 95 Gew.-% einer wässrigen Dispersion mindestens eines Epoxidfestharzes **EP** mit einem Festkörpergehalt von 50 bis 60%, bezogen auf die wässrige Dispersion;
b) 0.5 bis 2 Gew.-% mindestens eines Aminosilans **AS**; sowie
c) 0.5 bis 5 Gew.-% mindestens einer Säure **HS**, sowie
d) so viel Wasser, dass die Summe der einzelnen Bestandteile a) bis d) der Komponente **KA** 100 Gew.-% ergeben; und
- eine zweite Komponente **KB**, enthaltend
a) 5 bis 35 Gew.-% einer wässrigen Dispersion mindestens eines Aminhärters **AH** mit einem Festkörpergehalt von 75 bis 85 %, bezogen auf die wässrige Dispersion;
b) 0.5 bis 10 Gew.-% mindestens einer anorganischen Base **BA**;
c) 0 bis 35 Gew.-% Russ und/oder Pigmente;
d) 0 bis 0.5 Gew.-% mindestens eines Silankatalysators;
e) 0 bis 2 Gew.-% mindestens eines Netzmittels; sowie
f) so viel Wasser, dass die Summe der einzelnen Bestandteile a) bis f) der Komponente **KB** 100 Gew.-% ergeben.

12. Haftvermittlerzusammensetzung gemäss einem der Ansprüche 6 bis 10, umfassend eine einzelne Komponente **KAB**, enthaltend
a) 35 bis 50 Gew.-% einer wässrigen Dispersion mindestens eines Epoxidfestharzes **EP** mit einem Festkörpergehalt von 50 bis 60%, bezogen auf die wässrige Dispersion;
b) 0.25 bis 1 Gew.-% mindestens eines Aminosilans **AS**;
c) 0.25 bis 2.5 Gew.-% mindestens einer wasserlöslichen Carbonsäure **CHS**;
d) 1 bis 10 Gew.-% mindestens eines Aminhärters **AH** mit einem Festkörpergehalt von 75 bis 85 %, bezogen auf die wässrige Dispersion; sowie
e) so viel Wasser, dass die Summe der einzelnen Bestandteile a) bis e) der Komponente **KAB** 100 Gew.-% ergeben.

13. Verwendung einer Haftvermittlerzusammensetzung gemäss einem der Ansprüche 1 bis 12 als Voranstrich für Klebstoffe, Dichtstoffe oder Beschichtungen.

14. Verfahren zur Anwendung einer Haftvermittlerzusammensetzung gemäss einem der Ansprüche 2 bis 5 oder 8 bis 11, mindestens umfassend die Schritte:
a) Mischen der Komponenten **KA** und **KB** durch Vereinigen der beiden Komponenten, sowie anschliessendes Rühren und/oder Schütteln der entstehenden Mischung;
b) Auftragen der Mischung aus den Komponenten **KA** und **KB** auf die zu verklebende oder zu beschichtende Fläche;
c) Ablüften der aufgetragenen Haftvermittlerzusammensetzung bis das vorhandene Wasser mindestens teilweise verdunstet ist;
d) Auftragen des Kleb- oder Dichtstoffs auf die durch Schritte a) bis c) vorbehandelte Klebefläche.

15. Artikel, die mit Hilfe einer Haftvermittlerzusammensetzung gemäss einem der Ansprüche 1 bis 12 und/oder nach einem Verfahren gemäss Anspruch 14 verklebt oder beschichtet oder zum Verkleben oder Beschichten vorbehandelt wurden.

## Claims

1. Aqueous adhesion promoter composition comprising
a) at least one dispersed solid epoxy resin **EP;**
b) at least one aminosilane **AS;**
c) at least one acid **HS;**
d) at least one amine hardener **AH;** and
e) water.

2. Adhesion promoter composition according to Claim 1, **characterized in that** the adhesion promoter composition is at least two-component, comprising
- a first component **KA**, comprising
a) the at least one dispersed solid epoxy resin **EP;**
b) the at least one aminosilane **AS**;
c) the at least one acid **HS;** and
e) water; and
- a second component **KB** comprising
a) the at least one amine hardener **AH;**
b) additionally at least one inorganic base **BA;** and
c) water.

3. Adhesion promoter composition according to Claim 2, **characterized in that** the acid **HS** and the inorganic base **BA** together in water form an insoluble salt.

4. Adhesion promoter composition according to either of Claims 2 and 3, **characterized in that** the inorganic base **BA** comprises at least one alkali metal hydroxide and/or alkaline earth metal hydroxide.

5. Adhesion promoter composition according to any of Claims 2 to 4, **characterized in that** the acid **HS** comprises one or more acids from the group of H₃PO₄, H₂SO₄ or water-soluble carboxylic acids **CHS.**

6. Adhesion promoter composition according to Claim 1, **characterized in that** the adhesion promoter composition consists of a single component **KAB** and the acid **HS** comprises at least one water-soluble carboxylic acid **CHS.**

7. Adhesion promoter composition according to either of Claims 5 and 6, **characterized in that** the water-soluble carboxylic acid **CHS** comprises acetic acid.

8. Adhesion promoter composition according to any of the preceding claims, **characterized in that** the aminosilane **AS** comprises at least one aminosilane having at least one primary and/or at least one secondary amino group and also having at least one trimethoxysilane group.

9. Adhesion promoter composition according to any of the preceding claims, **characterized in that** the dispersed solid epoxy resin **EP** is included with a content of 15 to 35 wt%, based on the overall adhesion promoter composition.

10. Adhesion promoter composition according to any of the preceding claims, **characterized in that** the amine hardener **AH** is included with an amine hardener content of 0.5 to 30 wt%, based on the overall adhesion promoter composition.

11. Adhesion promoter composition according to any of Claims 2 to 5 or 8 to 10, comprising
- a first component **KA** comprising
a) 75 to 95 wt% of an aqueous dispersion of at least one solid epoxy resin **EP** having a solids content of 50 to 60%, based on the aqueous dispersion;
b) 0.5 to 2 wt% of at least one aminosilane **AS**; and
c) 0.5 to 5 wt% of at least one acid **HS**, and also
d) sufficient water to make the sum of the individual constituents a) to d) of component **KA** 100 wt%; and
- a second component **KB**, comprising
a) 5 to 35 wt% of an aqueous dispersion of at least one amine hardener **AH** having a solids content of 75 to 85%, based on the aqueous dispersion;
b) 0.5 to 10 wt% of at least one inorganic base **BA**;
c) 0 to 35 wt% of carbon black and/or pigments;
d) 0 to 0.5 wt% of at least one silane catalyst;
e) 0 to 2 wt% of at least one wetting agent; and also
f) sufficient water to make the sum of the individual constituents a) to f) of component **KB** 100 wt%.

12. Adhesion promoter composition according to any of Claims 6 to 10, comprising a single component **KAB** comprising
a) 35 to 50 wt% of an aqueous dispersion of at least one solid epoxy resin **EP** having a solids content of 50 to 60%, based on the aqueous dispersion;
b) 0.25 to 1 wt% of at least one aminosilane **AS**;
c) 0.25 to 2.5 wt% of at least one water-soluble carboxylic acid **CHS**;
d) 1 to 10 wt% of at least one amine hardener **AH** having a solids content of 75 to 85%, based on the aqueous dispersion; and also
e) sufficient water to make the sum of the individual constituents a) to e) of component **KAB** 100 wt%.

13. Use of an adhesion promoter composition according to any of Claims 1 to 12 as a primer for adhesives, sealants or coatings.

14. Method for employing an adhesion promoter composition according to any of Claims 2 to 5 or 8 to 11, at least comprising the steps of:
a) mixing components **KA** and **KB** by combining the two components, and subsequently stirring and/or shaking the resultant mixture;
b) applying the mixture of components **KA** and **KB** to the surface to be bonded or coated;
c) flashing off the applied adhesion promoter composition until the water present has undergone at least partial evaporation;
d) applying the adhesive or sealant to the bonding surface pretreated by steps a) to c).

15. Article bonded or coated, or pretreated for bonding or coating, with the aid of an adhesion promoter composition according to any of Claims 1 to 12 and/or according to a method according to Claim 14.

## Revendications

1. Composition aqueuse de promoteur d'adhésion, comprenant :
a) au moins une résine solide d'époxyde dispersée EP ;
b) au moins un aminosilane AS ;
c) au moins un acide HS ;
d) au moins un durcisseur aminé AH ; ainsi que
e) de l'eau.

2. Composition de promoteur d'adhésion selon la revendication 1, **caractérisée en ce que** la composition de promoteur d'adhésion est au moins bicomposante, comprenant :
- un premier composant KA, contenant:
a) ladite au moins une résine solide d'époxyde dispersée EP ;
b) ledit au moins un aminosilane AS ;
c) ledit au moins un acide HS ; ainsi que
e) de l'eau ; et
- un deuxième composant KB, contenant :
a) ledit au moins un durcisseur aminé AH ;
b) en outre au moins une base inorganique BA ; ainsi que
c) de l'eau.

3. Composition de promoteur d'adhésion selon la revendication 2, **caractérisée en ce que** l'acide HS et la base inorganique BA forment ensemble dans de l'eau un sel insoluble.

4. Composition de promoteur d'adhésion selon l'une quelconque des revendications 2 ou 3, **caractérisée en ce que** la base inorganique BA comprend au moins un hydroxyde alcalin et/ou alcalino-terreux.

5. Composition de promoteur d'adhésion selon l'une quelconque des revendications 2 à 4, **caractérisée en ce que** l'acide HS comprend un ou plusieurs acides du groupe constitué par H₃PO₄, H₂SO₄ ou les acides carboxyliques solubles dans l'eau CHS.

6. Composition de promoteur d'adhésion selon la revendication 1, **caractérisée en ce que** la composition de promoteur d'adhésion est constituée par un composant individuel KAB et l'acide HS comprend au moins un acide carboxylique soluble dans l'eau CHS.

7. Composition de promoteur d'adhésion selon l'une quelconque des revendications 5 ou 6, **caractérisée en ce que** l'acide carboxylique soluble dans l'eau CHS comprend de l'acide acétique.

8. Composition de promoteur d'adhésion selon l'une quelconque des revendications précédentes, **caractérisée en ce que** l'aminosilane AS comprend au moins un aminosilane contenant au moins un groupe amino primaire et/ou au moins un groupe amino secondaire, et contenant au moins un groupe triméthoxysilane.

9. Composition de promoteur d'adhésion selon l'une quelconque des revendications précédentes, **caractérisée en ce que** la résine solide d'époxyde dispersée EP est contenue en une teneur de 15 à 35 % en poids, par rapport à la composition de promoteur d'adhésion totale.

10. Composition de promoteur d'adhésion selon l'une quelconque des revendications précédentes, **caractérisée en ce que** le durcisseur aminé AH est contenu en une teneur en durcisseur aminé de 0,5 à 30 % en poids, par rapport à la composition de promoteur d'adhésion totale.

11. Composition de promoteur d'adhésion selon l'une quelconque des revendications 2 à 5 ou 8 à 10, comprenant :
- un premier composant KA, contenant :
a) 75 à 95 % en poids d'une dispersion aqueuse d'au moins une résine solide d'époxyde EP ayant une teneur en solides de 50 à 60 %, par rapport à la dispersion aqueuse ;
b) 0,5 à 2 % en poids d'au moins un aminosilane AS ; ainsi que
c) 0,5 à 5 % en poids d'au moins un acide HS, ainsi que
d) suffisamment d'eau pour que la somme des constituants individuels a) à d) du composant KA soit de 100 % en poids ; et
- un deuxième composant KB, contenant :
a) 5 à 35 % en poids d'une dispersion aqueuse d'au moins un durcisseur aminé AH ayant une teneur en solides de 75 à 85 %, par rapport à la dispersion aqueuse ;
b) 0,5 à 10 % en poids d'au moins une base inorganique BA ;
c) 0 à 35 % en poids de noir de carbone et/ou de pigments ;
d) 0 à 0,5 % en poids d'au moins un catalyseur de silane ;
e) 0 à 2 % en poids d'au moins un agent mouillant ; ainsi que
f) suffisamment d'eau pour que la somme des constituants individuels a) à f) du composant KB soit de 100 % en poids.

12. Composition de promoteur d'adhésion selon l'une quelconque des revendications 6 à 10, comprenant un composant individuel KAB, contenant :
a) 35 à 50 % en poids d'une dispersion aqueuse d'au moins une résine solide d'époxyde EP ayant une teneur en solides de 50 à 60 %, par rapport à la dispersion aqueuse ;
b) 0,25 à 1 % en poids d'au moins un aminosilane AS ;
c) 0,25 à 2,5 % en poids d'au moins un acide carboxylique soluble dans l'eau CHS ;
d) 1 à 10 % en poids d'au moins un durcisseur aminé AH ayant une teneur en solides de 75 à 85 %, par rapport à la dispersion aqueuse ; ainsi que
e) suffisamment d'eau pour que la somme des constituants individuels a) à e) du composant KAB soit de 100 % en poids.

13. Utilisation d'une composition de promoteur d'adhésion selon l'une quelconque des revendications 1 à 12 en tant que primaire pour adhésifs, agents d'étanchéité ou revêtements.

14. Procédé d'application d'une composition de promoteur d'adhésion selon l'une quelconque des revendications 2 à 5 ou 8 à 11, comprenant au moins les étapes suivantes :
a) le mélange des composants KA et KB par réunion des deux composants, puis agitation et/ou secouage du mélange formé ;
b) l'application du mélange des composants KA et KB sur la surface à coller ou à revêtir ;
c) la ventilation de la composition de promoteur d'adhésion appliquée jusqu'à ce que l'eau présente soit au moins partiellement évaporée ;
d) l'application de l'agent adhésif ou d'étanchéité sur la surface adhésive prétraitée par les étapes a) à c).

15. Article, qui a été collé ou revêtu ou prétraité pour le collage ou le revêtement à l'aide d'une composition de promoteur d'adhésion selon l'une quelconque des revendications 1 à 12 et/ou par un procédé selon la revendication 14.
